# EUROPEAN PATENT APPLICATION

(11) **EP 4 369 148 A1**
(43) Date of publication of application: **15.05.2024**
(21) Application number: 23772080.0
(22) Date of filing: 20.09.2023
(51) Int. Cl.: G06F 1/16, H04M 1/02, F16C 11/04

(54) **ELECTRONIC DEVICE COMPRISING DETACHABLE HINGE COVER**

(30) Priority: 26.09.2022 KR 20220121717; 13.10.2022 KR 20220131679
(71) Applicant: Samsung Electronics Co., Ltd., Suwon-si, Gyeonggi-do 16677 (KR)
(72) Inventor: SON, Kwonho, Suwon-si, Gyeonggi-do 16677 (KR); YOO, Minwoo, Suwon-si, Gyeonggi-do 16677 (KR)
(74) Representative: HGF
(86) International application number: PCT/KR2023/014294
(87) International publication number: WO 2024/071815

(57) **Abstract**

According to an embodiment of the disclosure, an electronic device may comprise a first housing, a second housing, at least one hinge module disposed between the first housing and the second housing and configured to rotatably connect the first housing and the second housing to each other, a flexible circuit board disposed in the first housing and the second housing, a hinge bracket, and/or a hinge cover. The hinge bracket may include a first surface to which the at least one hinge module is coupled and a second surface facing in a direction opposite to a direction in which the first surface faces. The hinge cover may be detachably disposed on the second surface. The flexible circuit board may be disposed on an area of the first surface spaced apart from the hinge module, and the hinge bracket is disposed to intervene between the flexible circuit board and the hinge cover.

## Description

### [Technical Field]

An embodiment of the disclosure relates to a detachable hinge cover and an electronic device including the same.

### [Background Art]

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As the demand for mobile communication increases, and the degree of integration of electronic devices increases, various technologies have been developed to enhance the portability of the electronic device and user convenience in use of multimedia functions. For example, the electronic device is downsized while the display of the electronic device is able to deliver the same or even better usability (e.g., a larger screen). Flexible displays, e.g., foldable or rollable displays, will come in commerce and electronic devices are expected to deliver better portability and use convenience. In general, a structure in which a plurality of different structures move relative to each other, such as an electronic device that is deformable between a folded (or rolled) state and an unfolded state (hereinafter referred to as a foldable electronic device), may typically be implemented by adopting a hinge structure.

### [Disclosure of Invention]

### [Solution to Problems]

According to an embodiment of the disclosure, an electronic device may comprise a first housing, a second housing, at least one hinge module disposed between the first housing and the second housing and configured to rotatably connect the first housing and the second housing to each other, a flexible circuit board disposed in the first housing and the second housing, a hinge bracket, and/or a hinge cover. The hinge bracket may include a first surface to which the at least one hinge module is coupled and a second surface facing in a direction opposite to a direction in which the first surface faces. The hinge cover may be detachably disposed on the second surface. The flexible circuit board may be disposed on an area of the first surface spaced apart from the hinge module, and the hinge bracket is disposed to intervene between the flexible circuit board and the hinge cover.

### [Brief Description of Drawings]

FIG. 1 is a block diagram illustrating an electronic device in a network environment according to an embodiment of the disclosure;
FIG. 2 is a view illustrating an unfolded state of an electronic device according to an embodiment of the disclosure;
FIG. 3 is a view illustrating a folded state of an electronic device according to an embodiment of the disclosure;
FIG. 4 is an exploded perspective view illustrating an electronic device according to an embodiment of the disclosure;
FIG. 5 is an exploded perspective view illustrating a portion of an electronic device according to an embodiment of the disclosure;
FIG. 6 is a view illustrating a hinge assembly according to an embodiment of the disclosure;
FIGS. 7A and 7B are perspective and cross-sectional views illustrating a hinge bracket, according to an embodiment of the disclosure;
FIGS. 8A and 8B are perspective and cross-sectional views illustrating a hinge bracket and a plate member, according to an embodiment of the disclosure;
FIGS. 9A and 9B are perspective and cross-sectional views illustrating a hinge bracket and a plate member, according to an embodiment of the disclosure;
FIG. 10 is a plan view and an enlarged perspective view illustrating a hinge cover and a connection assembly according to an embodiment of the disclosure;
FIG. 11 is an exploded perspective view illustrating the hinge cover and connection assembly of FIG. 10;
FIG. 12 is a plan view and an enlarged cross-sectional view illustrating a hinge cover and a latch member according to an embodiment of the disclosure;
FIG. 13 is a view illustrating a state in which a cover member is attached to an electronic device in a folded state and a state in which the cover member is removed from the electronic device according to an embodiment of the disclosure;
FIG. 14 is a cross-sectional view illustrating a process of attaching a hinge cover to a hinge bracket of an electronic device according to an embodiment of the disclosure;
FIG. 15 is a cross-sectional view illustrating a process of removing a hinge cover from a hinge bracket according to an embodiment of the disclosure;
FIGS. 16A and 16B are a cross-sectional view and a perspective view illustrating a hinge module when an electronic device is in a folded state according to an embodiment of the disclosure;
FIGS. 17A and 17B are a cross-sectional view and a perspective view illustrating a hinge module when an electronic device is in an intermediate state according to an embodiment of the disclosure;
FIG. 18 is a cross-sectional view illustrating a state of a hinge module in an intermediate state of an electronic device according to an embodiment of the disclosure;
FIGS. 19A and 19B are a cross-sectional view and a perspective view illustrating a hinge module when an electronic device is in an unfolded state according to an embodiment of the disclosure;
FIG. 20 is a perspective view illustrating a hinge bracket, connection assembly, and hinge cover of an electronic device according to an embodiment of the disclosure;
FIG. 21 is an enlarged view illustrating the hinge bracket and the connection assembly of FIG.20;
FIG. 22 is a perspective view of the hinge bracket and the connection assembly of FIG. 21 viewed at a different angle;
FIG. 23 is an exploded perspective view illustrating the hinge bracket and connection assembly of FIG. 20; and
FIGS. 24A and 24B are cross-sectional views illustrating a hinge bracket, connection assembly, and hinge cover of an electronic device according to an embodiment of the disclosure.

### [Mode for the Invention]

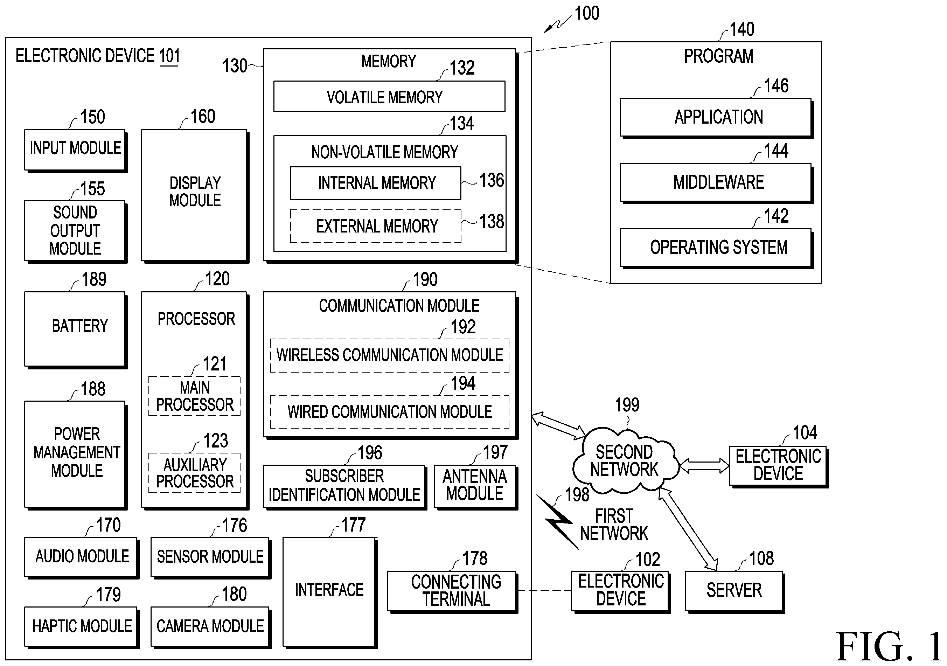

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network).According to an embodiment, the electronic device 101 may communicate with the electronic device 104 via the server 108.According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197.In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software(e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134.According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101.The various data may include, for example, software (e.g., the program 140) and input data or output data for a command related thereto. The memory 130 may include the volatile memory 132 or the non-volatile memory 134

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101.The input module 150 may include, for example, a microphone, a mouse, a keyboard, keys (e.g., buttons), or a digital pen (e.g., a stylus pen).

The sound output module 155 may output sound signals to the outside of the electronic device 101.The sound output module 155 may include, for example, a speaker or a receiver.The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101.The display 160 may include, for example, a display, a hologram device, or a projector and control circuitry to control a corresponding one of the display, hologram device, and projector.According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly.According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102).According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images.According to an embodiment, the camera module 180 may include one or more lenses, image sensors, image signal processors, or flashes.

The power management module 188 may manage power supplied to the electronic device 101.According to an embodiment, the power management module 188 may be implemented as at least part of, for example, a power management integrated circuit (PMIC).

The battery 189 may supply power to at least one component of the electronic device 101.According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel.The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)).These various types of communication modules may be implemented as a single component (e.g., a single chip), or may be implemented as multi components (e.g., multi chips) separate from each other.The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmittedor received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108.For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101.The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

In the following detailed description, a length direction, a width direction, and/or a thickness direction of the electronic device may be mentioned and may be defined as a `Y-axis direction,' 'X-axis direction', and/or `Z-axis direction,' respectively. In an embodiment, 'negative/positive (-/+)' may be mentioned together with the Cartesian coordinate system exemplified in the drawings with respect to the direction in which the component is oriented. For example, the front surface of the electronic device or housing may be defined as a 'surface facing in the +Z direction,' and the rear surface may be defined as a 'surface facing in the -Z direction'. In an embodiment, the side surface of the electronic device or housing may include an area facing in the +X direction, an area facing in the +Y direction, an area facing in the -X direction, and/or an area facing in the -Y direction. In another embodiment, the 'X-axis direction' may mean including both the '-X direction' and the '+X direction'. It should be noted that the directions are so defined with respect to the Cartesian coordinate system shown in the drawings for the sake of brevity of description, and the description of these directions or components do not limit an embodiment of the disclosure. For example, the direction in which the front surface or rear surface faces may be varied depending on the unfolded state or folded state of the electronic device, and the above-mentioned directions may be interpreted as different ones depending on the user's way to grip.

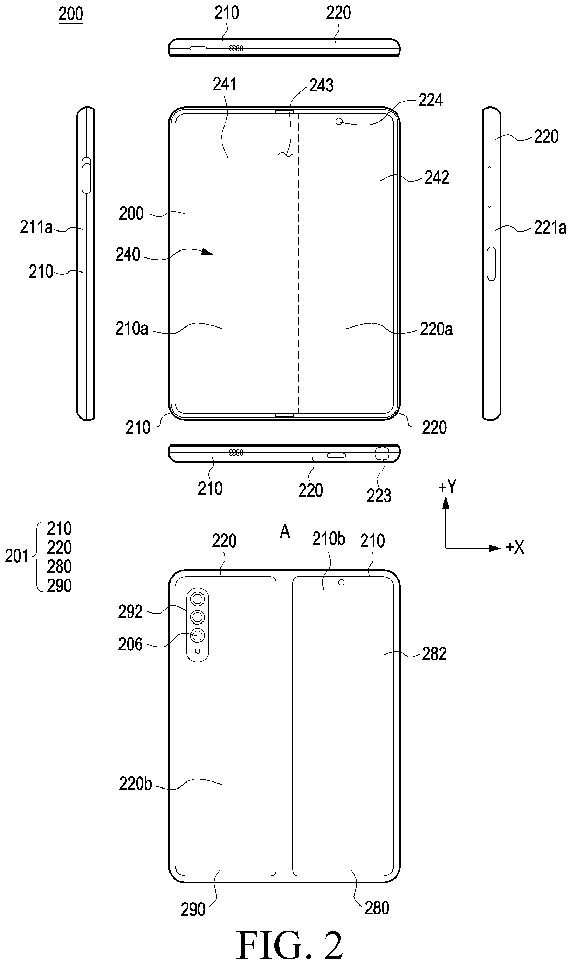

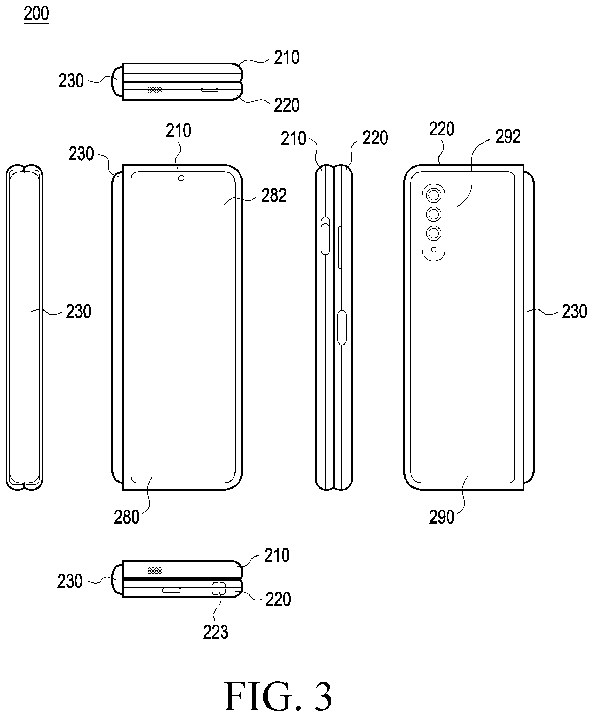

FIG. 2 is a view illustrating an unfolded state of an electronic device according to an embodiment of the disclosure. FIG. 3 is a view illustrating a folded state of an electronic device according to an embodiment of the disclosure. The configuration of the electronic device 101 of FIGS. 2 and 3 may be identical in whole or part to the configuration of the electronic device 101 of FIG. 1.

FIG. 2 is a view illustrating an unfolded state of an electronic device according to an embodiment of the disclosure. FIG. 3 is a view illustrating a folded state of an electronic device according to an embodiment of the disclosure.

Referring to FIGS. 2 and 3, in an embodiment, an electronic device 101 may include a housing 201, a hinge cover 230 covering a foldable portion of the housing 201, and a flexible or foldable display 240 (hereinafter, simply "display 240") disposed in a space formed by the housing 201. According to an embodiment, the surface on which the display 240 is disposed is defined as a front surface (e.g., a first front surface 210a and a second front surface 220a) of the electronic device 101. A surface opposite to the front surface is defined as a rear surface (e.g., the first rear surface 210b and the second rear surface 220b) of the electronic device 101. A surface surrounding the space between the front and rear surfaces is defined as a side surface (e.g., a first side surface 211a and a second side surface 221a) of the electronic device 101.

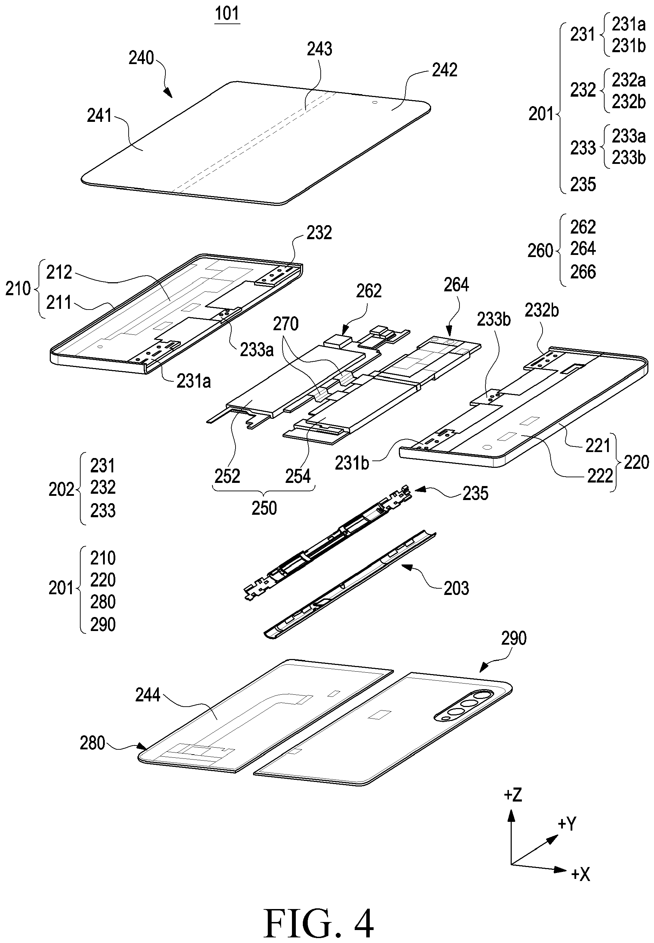

According to an embodiment, the housing 201 may include a first housing 210, a second housing 220 rotatably or pivotably coupled to the first housing 210, a first rear cover 280, a second rear cover 290, and a hinge module (e.g., the hinge assembly 202 of FIG. 4). The hinge assembly 202 may provide at least one folding axis A serving as a rotation center of the first housing 210 and/or the second housing 220. The housing 201 of the electronic device 101 are not limited to the shape and coupling shown in FIGS. 3 and 4 but may rather be implemented in other shapes or via a combination and/or coupling of other components. For example, in an embodiment, the first housing 210 and the first rear cover 280 may be integrally formed with each other, and the second housing 220 and the second rear cover 290 may be integrally formed with each other. According to an embodiment, the first housing 210 may be connected to a hinge module (e.g., the hinge assembly 202 of FIG. 4) and may include a first front surface 210a facing in a first direction and a first rear surface 210b facing in a second direction opposite to the first direction. The second housing 220 may be connected to the hinge assembly 202 and may include a second front surface 220a facing in a third direction (for example, depending on a folded or unfolded state of the device, the third direction may be an opposite direction to the first direction or substantially parallel to the first direction) and a second rear surface 220b facing in a fourth direction opposite to the third direction. The second housing 220 may be rotatably provided with respect to the first housing 210 about at least one folding axis (e.g., folding axis (A)) provided by the hinge assembly 202. Thus, the electronic device 101 may turn into a folded state or unfolded state (for example, the electronic device 101 may be configured into a folded or unfolded state). In the folded state of the electronic device 101, the first front surface 210a may face the second front surface 220aand, in the unfolded state, the third direction may be substantially parallel to the first direction(for example, the third direction may be an opposite direction to the first direction). Hereinafter, unless otherwise mentioned, directions are described based on the unfolded state of the electronic device 101.

According to an embodiment, the first housing 210 and the second housing 220 are disposed on both sides of the folding axis A and be overall symmetrical in shape with respect to the folding axis A. As set forth below, the first housing 210 and the second housing 220 may have different angles or distances formed therebetween depending on whether the electronic device 101 is in the unfolded, folded, or an intermediate state. According to an embodiment, the second housing 220 further includes asensor area 224 where various sensors are disposed, unlike the first housing 210 but, in the remaining area, the second housing 220 may be symmetrical in shape with the first housing 210. According to an embodiment, there may be provided a plurality of (e.g., two or more) folding axes A parallel to each other. In embodiments of the disclosure, the folding axis A is provided along the length direction (Y-axis direction) of the electronic device 101, but the direction of the folding axis A is not limited thereto. For example, according to external design or the user's usage habit, the electronic device 101 may be understood as including a folding axis A extending along the width direction (e.g., X-axis direction).

According to an embodiment, the electronic device 101 may include a structure into which a digital pen may be inserted. For example, a hole 223 into which the digital pen may be inserted may be formed in a side surface of the first housing 210 or a side surface of the second housing 220 of the electronic device 101.

According to an embodiment, the first housing 210 and the second housing 220 may at least partially be formed of a metal or non-metallic material with a rigidity selected to support the display 240. At least a portion formed of metal may provide a ground plane of the electronic device 101 and may be electrically connected with a ground conductor provided to the printed circuit board (e.g., the board assembly 260 of FIG. 4).

According to an embodiment, the sensor area 224 may be formed to have a predetermined area, adjacent to a corner of the second housing 220. However, the placement, shape, or size of the sensor area 224 is not limited to those illustrated. For example, in an embodiment, the sensor area 224 may be provided in a different corner of the second housing 220 or in any area between the top corner and the bottom cornerof the second housingor in the first housing 210. According to an embodiment, components for performing various functions, embedded in the electronic device 101, may be visually exposed through the sensor area 224 or one or more openings in the sensor area 224 to the front surface of the electronic device 101. In an embodiment, the components may include various kinds of sensors. The sensor may include, e.g., at least one of a front camera, a receiver, or a proximity sensor.

According to an embodiment, the first rear cover 280 may be disposed on one side of the folding axis A on the rear surface of the electronic device 101 and have, e.g., a substantially rectangular periphery which may be surrounded by the first housing 210. Similarly, the second rear cover 290 may be disposed on the opposite side of the folding axis A on the rear surface of the electronic device 101 and its periphery may be surrounded by the second housing 220.

According to an embodiment, the first rear cover 280 and the second rear cover 290 may be substantially symmetrical in shape with respect to the folding axis A. However, the first rear cover 280 and the second rear cover 290 are not necessarily symmetrical in shape (for example, the first rear cover 280 may have a first shape and the second rear cover 290 may have a second shape that is different to the first shape). In an embodiment, the electronic device 101 may include the first rear cover 280 and the second rear cover 290 in various shapes.

According to an embodiment, the first rear cover 280, the second rear cover 290, the first housing 210, and the second housing 220 may form a space where various components (e.g., a printed circuit board or battery) of the electronic device 101 may be disposed. According to an embodiment, one or more components may be arranged on or visually exposed through the rear surface of the electronic device 101. For example, at least a portion of a sub display (e.g., the sub display 244 of FIG. 4) may be visually exposed through a first rear surface area 282 of the first rear cover 280. In an embodiment, one or more components or sensors may be visually exposed through a second rear surface area 292 of the second rear cover 290. In an embodiment, the sensor may include a proximity sensor and/or a camera module 206 (e.g., rear camera).

In an embodiment, a front camera visually exposed to the front surface of the electronic device 101 through one or more openings prepared in the sensor area 224 or a camera module 206 visually exposed through a second rear surface area 292 of the second rear cover 290 may include one or more lenses, an image sensor, and/or an image signal processor. According to an embodiment, two or more lenses (an infrared (IR) camera, a wide-angle lens, and a telephoto lens) and image sensors may be disposed on one surface of the electronic device 101.

Referring to FIG. 3, the hinge cover 230 may be disposed between the first housing 210 and the second housing 220 to hide the internal components (e.g., the hinge assembly 202 of FIG. 4). According to an embodiment, the hinge cover 230 may be hidden by a portion of the first housing 210 and second housing 220 or be exposed to the outside depending on the state (e.g., the unfolded state (e.g., flat state) or folded state) of the electronic device 101. For example, in the unfolded state, the hinge cover 230 may be substantially covered by the first housing 210 and the second housing 220, and in the folded state, most of the outer surface of the hinge cover 230 may be exposed to the outside.

According to an embodiment, as shown in FIG. 2, in the unfolded state of the electronic device 101, the hinge cover 230 may be hidden, and thus not exposed, by the first housing 210 and the second housing 220. As another example, as shown in FIG. 3, in the folded state (e.g., a fully folded state) of the electronic device 101, the hinge cover 230 may be exposed to the outside between the first housing 210 and the second housing 220. As another example, in an intermediate state in which the first housing 210 and the second housing 220 are folded with a certain angle, the hinge cover 230 may be partially exposed to the outside between the first housing 210 and the second housing 220. However, in this case, the exposed area may be smaller than that in the completely folded state. In an embodiment, the hinge cover 230 may include a curved surface.

According to an embodiment, the display 240 may be disposed in a space formed by the housing 201. For example, the display 240 may be seated on a recess formed by the housing 201 and may occupy most of the front surface of the electronic device 101. Thus, the front surface of the electronic device 101 may include the display 240 and a partial area of the first housing 210 and a partial area of the second housing 220, which are adjacent to the display 240. The rear surface of the electronic device 101 may include a first rear cover 280, a partial area of the first housing 210 adjacent to the first rear cover 280, a second rear cover 290, and a partial area of the second housing 220 adjacent to the second rear cover 290.

According to an embodiment, the display 240 may mean a display of which at least a portion may be transformed into a flat or curved surface. According to an embodiment, the display 240 may include a folding area 243, a first display area 241 disposed on one side of the folding area 243 (e.g., the left side of the folding area 243 of FIG. 2), and a second display area 242 disposed on the opposite side of the folding area 243 (e.g., the right side of the folding area 203 of FIG. 2).

However, the segmentation of the display 240 is merely an example, and the display 240 may be divided into a plurality of (e.g., four or more, or two) areas depending on the structure or function of the display 200. For example, in the embodiment illustrated in FIG. 2, the display 240 may be divided into the areas by the folding area 243 or folding axis (axis A) extending in parallel with the Y axis but, in an embodiment, the display 240 may be divided into the areas with respect to another folding area (e.g., a folding area parallel with the X axis) or another folding axis (e.g., a folding axis parallel with the X axis). According to an embodiment, the display 240 may be coupled with or disposedadjacent to a touch detection circuit, a pressure sensor capable of measuring the strength (pressure) of touches, and/or a digitizer (not shown) for detecting a magnetic field-type stylus pen.

According to an embodiment, the first display area 241 and the second display area 242 may be overall symmetrical in shape with respect to the folding area 243. According to an embodiment (not shown), unlike the first display area 241, the second display area 242 may include a notch depending on the presence of the sensor area 224, but the rest may be symmetrical in shape with the first display area 241. In other words, the first display area 241 and the second display area 242 may include symmetrical portions and asymmetrical portions.

Described below are the operation of the first housing 210 and the second housing 220 and each area of the display 240 depending on the state (e.g., the unfolded state (or flat state) and folded state) of the electronic device 101.

According to an embodiment, when the electronic device 101 is in the unfolded state (flat state) (e.g., FIG. 2), the first display area 241 and the second display area 242 may be disposed to face in the same direction while the first housing 210 and the second housing 220 are angled substantially at 180 degrees therebetween. For example, in the unfolded state, the surface of the first display area 241 and the surface of the second display area 242 may be angled at 180 degrees therebetween while facing in the same direction (e.g., forward of the front surface of the electronic device). The folding area 243 may form substantially the same plane with the first display area 241 and the second display area 242.

According to an embodiment, when the electronic device 101 is in the folded state (e.g., FIG. 3), the first housing 210 and the second housing 220 may be disposed to face each other. The surface of the first display area 241 and the surface of the second display area 242 of the display 240 may be angled at a small angle (e.g., an angle between 0 degrees and 10 degrees) therefrom while substantially facing each other. At least a portion of the folding area 243 may be formed as a curve having a predetermined curvature.

According to an embodiment, when the electronic device 101 is in the intermediate state (not shown), the first housing 210 and the second housing 220 may be disposed at a certain angle therebetween. The surface of the first display area 241 of the display 240 and the surface of the second display area 242 may form an angle which is larger than the angle in the folded state and smaller than the angle in the unfolded state. The folding area 243 may at least partially have a curved surface with a predetermined curvature and, in this case, the curvature may be smaller than that when it is in the folded state.

FIG. 4 is an exploded perspective view illustrating an electronic device according to an embodiment of the disclosure.

The electronic device 101 of FIG. 4 may be referred to as the electronic device 101 of FIG. 1 and/or the electronic device 101 of FIGS. 2 and 3. The configuration of the housing 201 and/or the display 240 of FIG. 4 may be the same in whole or part as the configuration of the housing 201 and/or the display 240 of FIGS. 2 and 3.

Referring to FIG. 4, in an embodiment, an electronic device 101 may include a housing 201, a hinge assembly 202, a hinge cover 203, a display 240, a battery 250 and/or a board assembly 260.

According to an embodiment, the housing 201 may include a first housing 210 (e.g., the first housing 210 of FIGS. 2 and 3), a second housing 220 (e.g., the second housing 220 of FIGS. 2 and 3), a hinged cover 203 (e.g., the hinge cover 230 of FIG. 3), a first rear cover 280 (e.g., the first rear cover 280 of FIG. 3), and/or a second rear cover 290 (e.g., the second rear cover 290 of FIG. 3). In an embodiment, the hinge assembly 202 providing a folding axis (e.g., the folding axis A of FIG. 1) may be disposed inside the housing 201, rotatably connecting the first housing 210 and the second housing 220.

According to an embodiment, the first housing 210 and the second housing 220 may be assembled together to be coupled to two opposite sides of the hinge assembly 202. According to an embodiment, the first housing 210 may include a first supporting area 212 (e.g., a first supporting plate or a first supporting member) that may support the components (e.g., the first circuit board 262 and/or the first battery 252) of the electronic device 101 and a first sidewall 211 surrounding at least a portion of the first supporting area 212. The first sidewall 211 may include a first side surface (e.g., the first side surface 211a of FIG. 2) of the electronic device 101. According to an embodiment, the second housing 220 may include a second supporting area 222 (e.g., a second supporting plate or a second supporting member) that may support the components (e.g., the second circuit board 264 and/or the second battery 254) of the electronic device 101 and a second sidewall 221 surrounding at least a portion of the second supporting area 222. The second sidewall 221 may include a second side surface (e.g., the second side surface 221a of FIG. 3) of the electronic device 101.

According to an embodiment, the hinge assembly 202 may be disposed between the display 240 and the hinge cover 203. In an embodiment, the hinge assembly 202 may include at least one hinge module 231, 232, and 233 and/or a hinge bracket 235. In an embodiment, each of the hinge modules 231, 232, and 233 may be coupled to a partial area of one surface (e.g., a surface in the +Z direction) of the hinge bracket 235.

In an embodiment, the hinge modules 231, 232, and 233 may include a first hinge module 231 and 232 providing a rotation structure and a detent structure for the first housing 210 and/or the second housing 220, and a second hinge module 233 providing an interlocking structure (for example, the second hinge module 233 may provide a means for interlocking the first housing 210 and the second housing 220 via the hinge bracket 235).

According to an embodiment, the first hinge module 231 and 232 may include at least one rotation structure (e.g., a first rotation structure 231 and/or a second rotation structure 232) that implements or guides rotation of the first housing 210 and/or the second housing 220. According to an embodiment, the first hinge module 231 and 232 may include a first rotation structure 231 and/or a second rotation structure 232 spaced apart from each other in the length direction (e.g., Y-axis direction) of the electronic device. For example, the first rotation structure 231 and/or the second rotation structure 232 may provide at least one (for example, one or two, or more) rotational axis parallel to the length direction of the electronic device or hinge bracket. For example, the at least one rotational axis may be substantially parallel to the folding axis (e.g., the folding axis A of FIG. 2) of the electronic device.

In an embodiment, the first rotation structure 231 and/or the second rotation structure 232 may include rotating members 231a, 231b, 232a, and 232b and a detent structure (not shown), respectively. For example, the first hinge module 231 may include a 1-1th rotating member 231a connected to the first housing 210 and/or a 1-2th rotating member 231b connected to the second housing 220. For example, the second hinge module 233 may include a 2-1st rotating member 232a connected to the first housing 210 and/or a 2-2th rotating member 232b connected to the second housing 220.For example, at least one rotating member 231a, 231b, 232a, and 232b of the first rotation structure 231 and/or the second rotation structure 232 may be connected to the hinge bracket 235. For example, the hinge bracket 235 may provide a space (not shown) in which at least one rotating member 231a, 231b, 232a, and 232b is seated and may rotate about at least one rotational axis. For example, the hinge bracket 235 may include a rail (not shown) formed to guide rotation of the at least one rotating member 231a, 231b, 232a, and 232b in a seated area to which a portion of the at least one rotating member 231a, 231b, 232a, and 232b is connected.

According to an embodiment, the detent structure (not shown) of each of the first rotation structure 231 and/or the second rotation structure 232 may position the first housing 210 and the second housing 220 at a certain angle. For example, the detent structure (not shown) may prevent or reduce movement and/or rotation of the first housing 210 and/or the second housing 220 of the electronic device 101 by using an elastic force of a spring (not shown). For example, the detent structure (not shown) may be formed to allow rotation of the first housing 210 and/or the second housing 220 when an external force transmitted from the first housing 210 and/or the second housing 220 is equal to or greater than a designated value. According to an embodiment, the detent structure (not shown) of the first rotation structure 231 and/or the second rotation structure 232 may include a plurality of (e.g., a pair of) detent members (not shown) connected to the first housing 210 and the second housing 220, respectively.

In an embodiment, the second hinge module 233 may be configured to include an interlocking structure (not shown) that interlocks the rotation of the first housing 210 and the rotation of the second housing 220. For example, the second hinge module 233 may transfer at least a portion of the force applied to the first housing 210 to the second housing 220, or may transfer at least a portion of the force applied to the second housing 220 to the first housing 210. For example, the second hinge module 233 may rotate the second housing 220 by substantially the same angle as the angle at which the first housing 210 rotates using the helical rotating members 233a and 233b, and vice versa. According to an embodiment, the second hinge module 233 may include a first helical rotating member 233a connected to the first housing 210 and/or a second helical rotating member 233b connected to the second housing 220. For example, the at least one helical rotating member 233a or 233b of the second hinge module 233 may be connected to the hinge bracket 235. For example, the hinge bracket 235 may provide a space (not shown) in which the first rotating member 232a and/or the second rotating member 232b is seated to rotate about at least one rotational axis. For example, the hinge bracket 235 may include a rail (not shown) formed to guide rotation of the first rotating member 232a and/or the second rotating member 232b in a seated area to which a portion of the first rotating member 232a and/or the second rotating member 232b is connected.

In an embodiment, the hinge cover 203 (e.g., the hinge cover 230 of FIG. 3) may be detachably disposed on one surface (e.g., a surface in the -Z direction) of the hinge bracket.

According to an embodiment, the display 240 may include a first display area 241 (e.g., the first display area 241 of FIG. 2), a second display area 242 (e.g., the second display area 242 of FIG. 2), a folding area 243 (e.g., the folding area 243 of FIG. 2), and/or a sub-display 244. According to an embodiment, the sub display 244 may display screen in a different direction from the display areas 241 and 242. For example, the sub display 244 may output screen in a direction opposite to the first display area 241. According to an embodiment, the sub display 244 may be disposed on the first rear cover 280.

According to an embodiment, the battery 250 may include a first battery 252 disposed in the first housing 210 and a second battery 254 disposed in the second housing 220. According to an embodiment, the first battery 252 may be disposed on the first circuit board 262, and the second battery 254 may be disposed on the second circuit board 264.

According to an embodiment, the board assembly 260 may include a first circuit board 262 disposed within the first housing 210 and a second circuit board 264 disposed within the second housing 220. According to an embodiment, the board assembly 260 may include at least one flexible printed circuit board 270 for electrically connecting the first circuit board 262 and the second circuit board 264. According to an embodiment, at least a portion of the flexible printed circuit board 270 may be disposed across the hinge assembly 202. According to an embodiment, the first circuit board 262 and the second circuit board 264 may be disposed in a space formed by the first housing 210, the second housing 220, the first rear cover 280, and the second rear cover 290. For example, components for implementing various functions of the electronic device 101 may be disposed on the first circuit board 262 and the second circuit board 264.

According to various embodiments, the electronic device 101 may include a speaker module 208 (e.g., the audio module 170 of FIG. 1). According to an embodiment, the speaker module 208 may convert an electrical signal into sound. According to an embodiment, the speaker module 208 may be disposed in a space formed by the first housing 210, the second housing 220, the first rear cover 280, and the second rear cover 290.

In the following detailed description, a configuration in which the first housing 210 and the second housing 220 are connected or coupled to be rotatable by a hinge module (or referred to as a `hinge structure') may be described as an example. However, it should be noted that the electronic device according to various embodiments of the disclosure is not limited thereto. For example, according to various embodiments, the electronic device may include three or more housings. In the embodiment disclosed below, a "pair of housings" may mean two rotatably-coupled housings among three or more housings.

The electronic device 101 disclosed in FIGS. 2 to 4 is illustrated as having the appearance of a foldable electronic device, but is not limited thereto. For example, the electronic device may be a bar-type, plate-type or rollable electronic device. "Rollable electronic device" may mean an electronic device at least a portion of which may be wound or rolled or accommodated in a housing (e.g., the housing 201 of FIG. 2) as the display (e.g., the display 240 of FIG. 4) may be bent and deformed. As the display is stretched out or is exposed to the outside in a larger area according to the user's need, the rollable electronic device may use an expanded second display area.

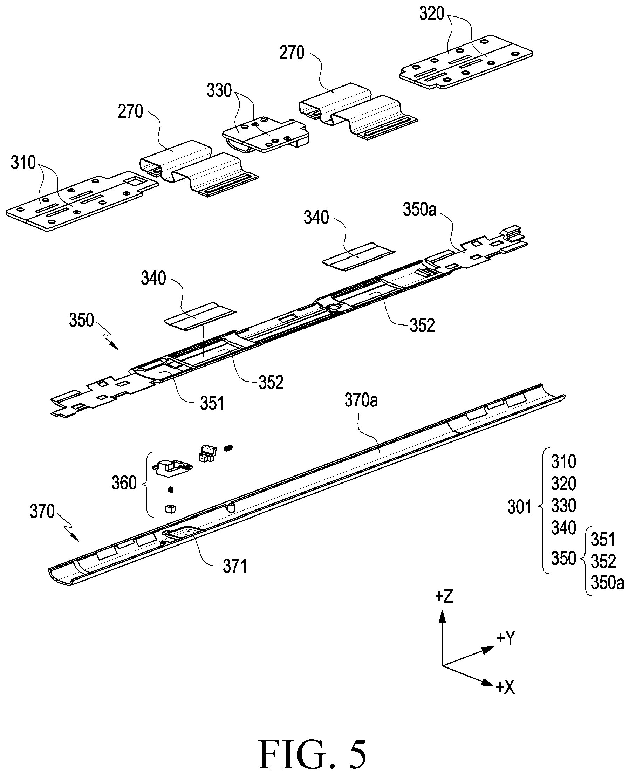

Hereinafter, various examples of specific configurations of a hinge assembly and a hinge cover of an electronic device are described with reference to FIGS. 5 to 24B. In describing examples disclosed herein with reference to FIGS. 5 to 24B, the electronic device 101 according to the above-described embodiment may be referenced, and the same reference numbers may be used to denote substantially the same or similar components to those of the above-described example or be omitted, and no detailed description thereof may be given.

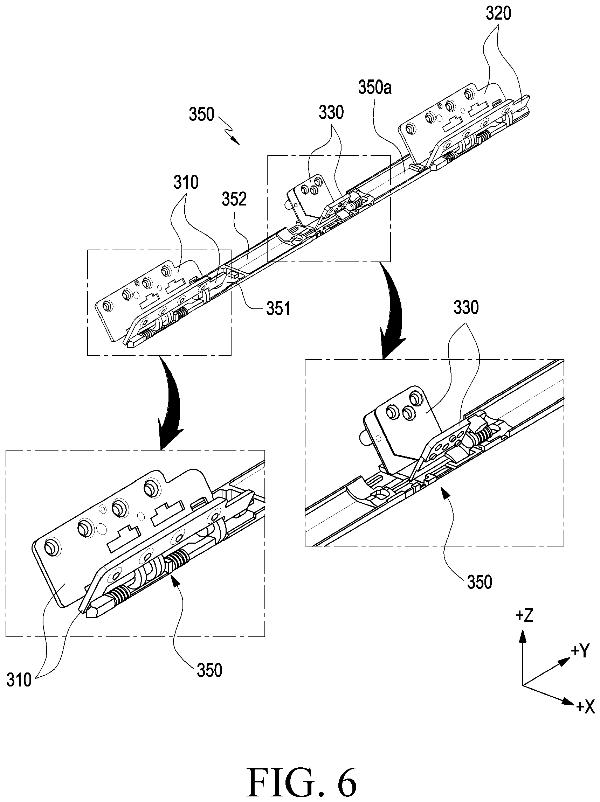

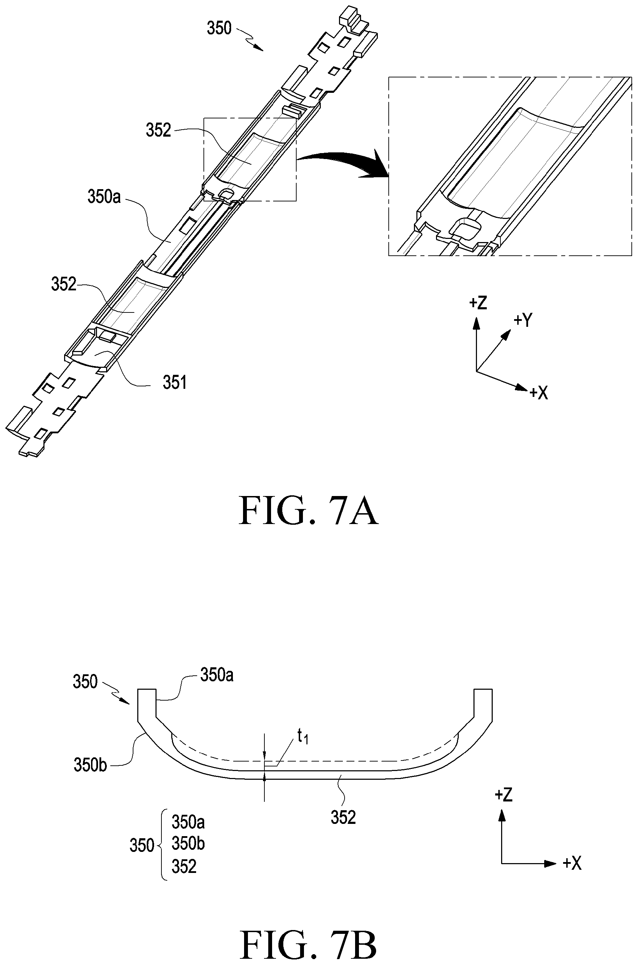

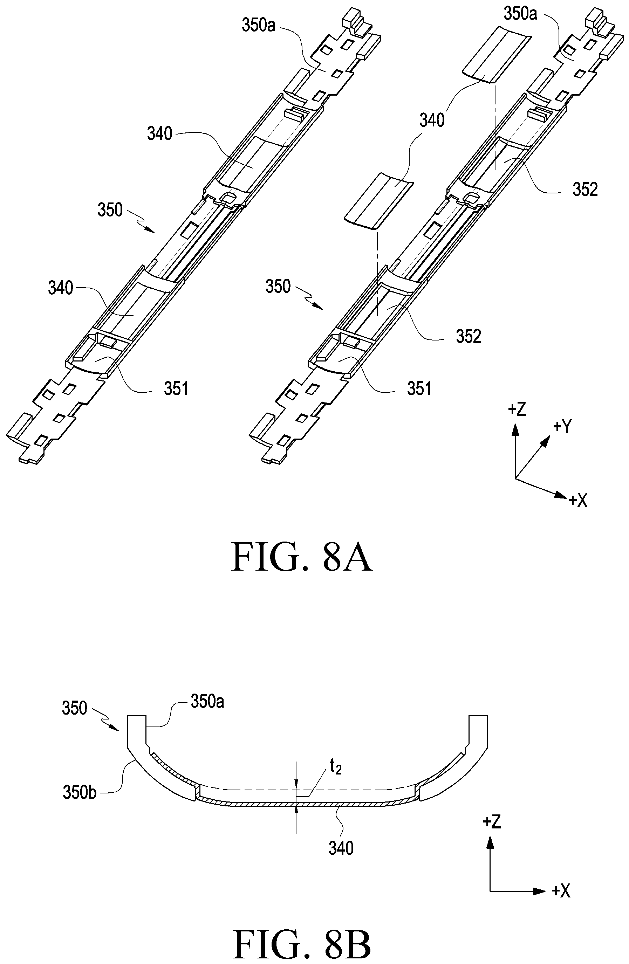

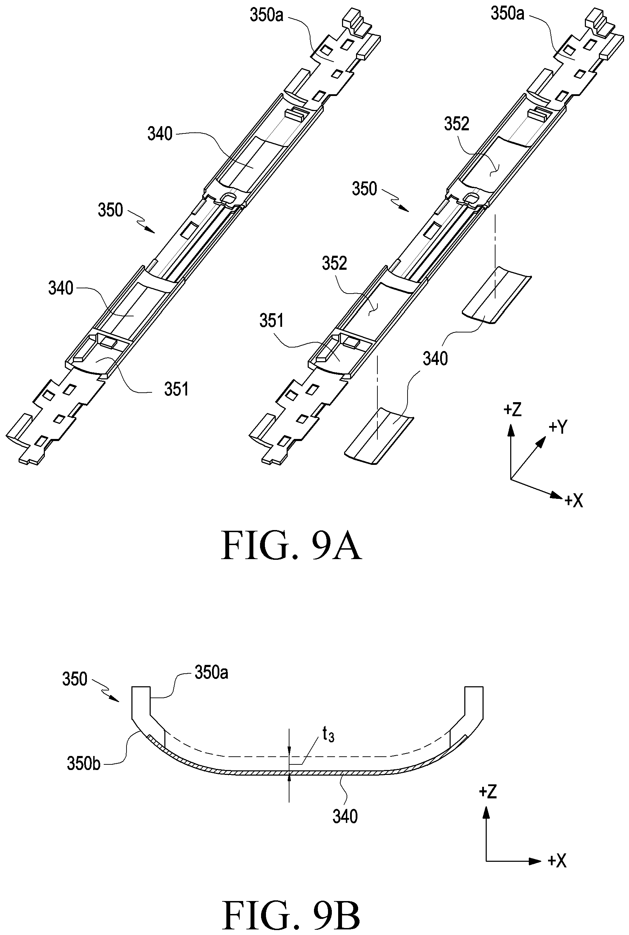

FIG. 5 is an exploded perspective view illustrating a portion of an electronic device according to an embodiment of the disclosure. FIG. 6 is a view illustrating a hinge assembly according to an embodiment of the disclosure. FIGS. 7A and 7B are perspective and cross-sectional views illustrating a hinge bracket, according to an embodiment of the disclosure. FIGS. 8A and 8B are perspective and cross-sectional views illustrating a hinge bracket and a plate member, according to an embodiment of the disclosure. FIGS. 9A and 9B are perspective and cross-sectional views illustrating a hinge bracket and a plate member, according to an embodiment of the disclosure.

The flexible printed circuit board of FIG. 5 may be referred to as the flexible printed circuit board of FIG. 4. The configuration of the hinge assembly of FIG. 5 and FIG. 6 may be identical in whole or part to the configuration of the hinge assembly of FIG. 4. The configuration of the hinge cover of FIGS. 5 to 9B may be identical in whole or part to the configuration of the hinge cover of FIG. 4.

Referring to FIGS. 5 to 9B, in an embodiment, an electronic device 101 (e.g., the electronic device 101 of FIGS. 1 to 3) may include a hinge assembly 301, a flexible circuit board 270, a hinge cover 370, and a connection assembly 360.

In an embodiment, the hinge assembly 301 may include a hinge bracket 350 (e.g., the hinge bracket 235 of FIG. 4) and hinge modules 310, 320, and 330 (e.g., the hinge modules 231, 232, and 233 of FIG. 4).

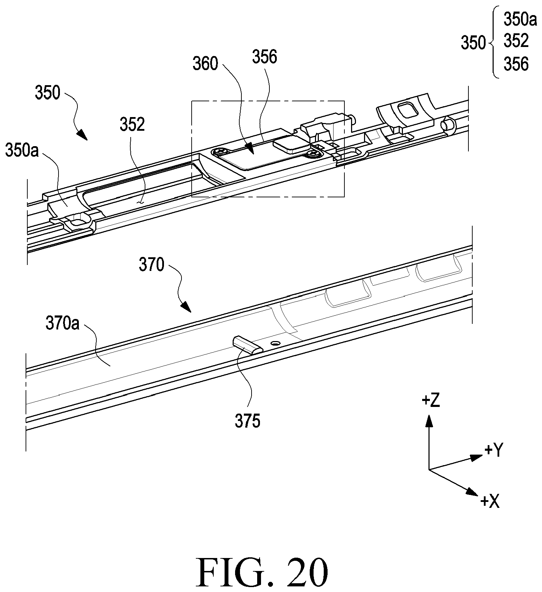

In an embodiment, the hinge bracket 350 may include a first surface 350a (e.g., a surface in the +Z direction) facing the hinge modules 310, 320, and 330 and a second surface 350b (e.g., a surface in the -Z direction) facing in the direction opposite to the direction where the first surface 350a faces and facing the hinge cover 370. For example, the hinge bracket 350 may extend in the length direction (e.g., the Y-axis direction) of the electronic device 101. For example, the first surface 350a and/or the second surface 350b may be formed to include a curved shape and/or a flat shape. For example, the hinge bracket 350 may include a side surface surrounding between the first surface 350a and the second surface 350b. For example, the first surface 350a and/or the second surface 350b may form at least a portion of the side surface. In an embodiment, when the connection assembly 360 is coupled to the hinge cover 370, the hinge bracket 350 may include a connection opening 351 where at least a portion of the connection assembly 360 is accommodated. In an embodiment, when the connection assembly 360 is coupled to the hinge bracket 350 (e.g., see FIGS. 20 to 24B), the connection opening 351 may be omitted.

In an embodiment, at least one first hinge module 310 and 320 (e.g., the first rotation structure 231 and/or the second rotation structure 232 of FIG. 4) and at least one second hinge module 330 (e.g., the second hinge module 233 of FIG. 4) may be coupled to the first surface 350a of the hinge bracket 350. For example, the first hinge module 310 and 320 and/or the second hinge module 330 may be at least partially seated in a recess formed in the first surface 350a or a hole formed through the first surface 350a to the second surface 350b, and may be rotatably coupled thereto. For example, as described above with reference to FIG. 4, the hinge bracket 350 may include a rail area (not shown) that accommodates a portion of the first hinge module 310 and 320 and/or the second hinge module 330 and guides rotation of the first hinge module 310 and 320 and/or the second hinge module 330. For example, in an embodiment, referring to FIG. 5, a portion of one surface (e.g., the first surface 350a) of the hinge bracket 350 may overlap the flexible circuit board 270.

For example, the at least one flexible circuit board 270 may be disposed to cross the hinge bracket 350 in a direction (e.g., the width direction or the X-axis direction of the electronic device 101) crossing the length direction of the electronic device 101 (for example, the at least one flexible circuit board 270 may be disposed to cross the hinge bracket 350 such that the at least one flexible circuit board 270 electrically connects the first circuit board 262 and the second circuit board 264).For example, an area of the first surface 350a of the hinge bracket 350 that overlaps the flexible circuit board 270 may be positioned outside the area of the first surface 350a that overlaps the first hinge module 310 and 320 and the second hinge module 330.

According to an embodiment, the hinge bracket 350 may include at least one seating area 352 where a portion of the at least one flexible circuit board 270 is seated, According to an embodiment, a pair of flexible circuit boards 270 may be provided which are disposed side by side with the second hinge module 330 interposed therebetween. For example, the seating area 352 may include a plurality (e.g., two) seating areas 352 where the flexible circuit board 270, respectively, are disposed. For example, a portion of the flexible circuit board 270 disposed in the seating area 352 may vary between a curved shape and a flat shape based on rotation of the hinge module,

Referring to FIGS. 5 to 7B, the seating area 352 may be a recess in the first surface 350a of the hinge bracket 350,For example, the size and shape of the seating area 352 may correspond to the size and shape of an area overlapping the flexible circuit board 270. For example, the first thickness t1 (e.g., the thickness in the Z-axis direction) of the seating area 352 may be changed according to the thickness (e.g., the thickness in the Z-axis direction) of the flexible circuit board 270. As an example, the thickness t1 of the seating area 352 may be substantially the same as the thickness of the flexible circuit board 270 or may be greater than the thickness of the flexible circuit board 270.

Referring to FIGS. 8A to 9B, in an embodiment, the seating area 352 of the hinge bracket 350 may be a hole formed through the first surface 350a of the hinge bracket 350 to the second surface 350b. At least one plate member 340 may be included in the hole of the seating area 352. In the disclosure, it may be understood that the seating area 352 of FIGS. 8A to 9B includes the plate member 340. For example, the size and shape of the seating area 352 may correspond to the size and shape of an area overlapping the flexible circuit board 270.

Referring to FIGS. 8A to 9B, in an embodiment, the plate member 340 may include an extension overlapping an edge of the seating area 352. The plate member 340 may be a thin film-shaped member, and may form a waterproof structure around the seating area 352 of the hinge bracket 350. For example, the plate member 340 may block external foreign matter (e.g., moisture or dust) of the electronic device 101 from entering the inner space of the electronic device 101 including the flexible circuit board 270. For example, the extension may be formed to surround at least a portion of the edge of the seating area 352. For example, an adhesive material (e.g., an adhesive or a double-sided tape) may be disposed between the extension and the seating area 352 facing each other, or may be omitted.

Referring to FIGS. 8A and 8B, in an embodiment, the plate member 340 may be disposed on the first surface 350a to close the seating area 352. According to an embodiment, the plate member 340 may be installed on the first surface 350a in a form where the extension area extends over the first surface 350a. For example, the extension area may be formed to surround at least a portion of an edge of the first surface 350a and a sidewall of the hole of the seating area 352. For example, a portion of the plate member 340 may be accommodated inside the hole of the seating area 352 and may be exposed to the second surface 350b. Referring to FIG. 8B, the second thickness t2 (e.g., the thickness in the Z-axis direction) of the seating area 352 may be substantially the same as the thickness of the flexible circuit board 270 (e.g., the thickness in the Z-axis direction) or may be greater than the thickness of the flexible circuit board 270.

Referring to FIGS. 9A and 9B, in an embodiment, the plate member 340 may be disposed on the second surface 350b to close the seating area 352. According to an embodiment, a recess for seating the plate member 340 may be formed on the edge of the seating area 352 on the second surface 350b. For example, the plate member 340 may be coupled to the second surface 350b in a form where at least a portion of the plate member 340 is accommodated in the recess on the second surface 350b. Referring to FIG. 9B, a third thickness t3 (e.g., the thickness in the Z-axis direction) of the seating area 352 may be greater than the second thickness t2 of FIG. 8B.

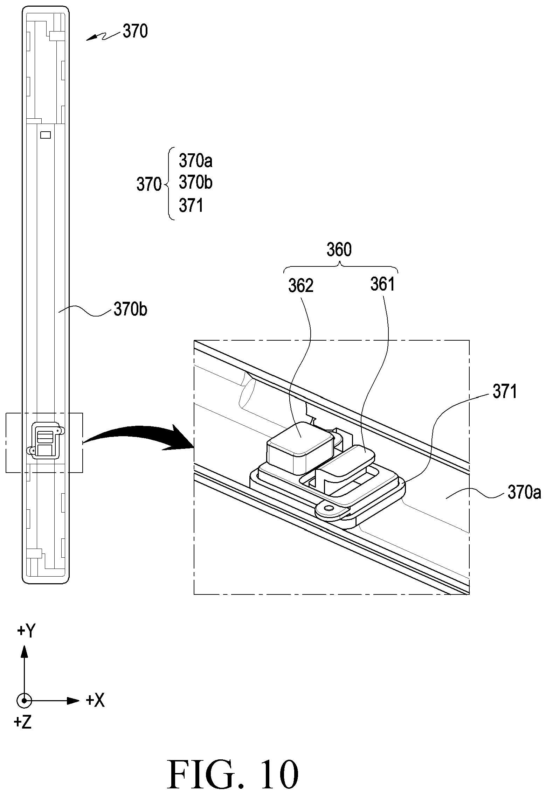

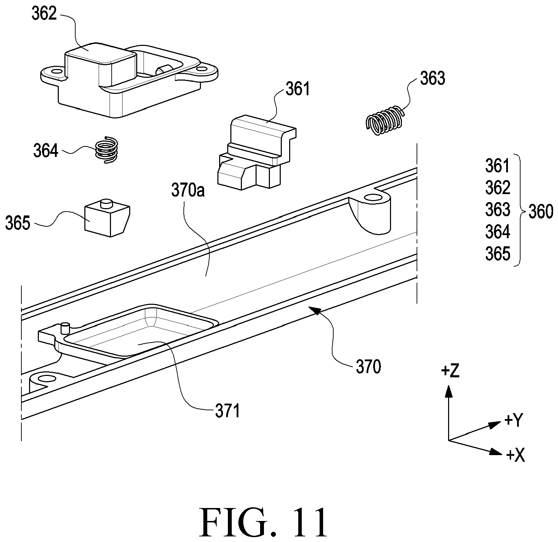

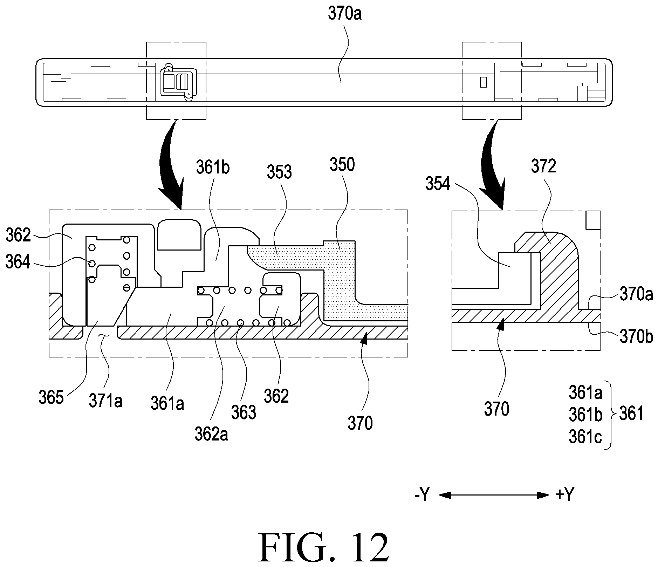

FIG. 10 is a plan view and an enlarged perspective view illustrating a hinge cover and a connection assembly according to an embodiment of the disclosure. FIG. 11 is an exploded perspective view illustrating the hinge cover and connection assembly of FIG. 10. FIG. 12 is a plan view and an enlarged cross-sectional view illustrating a hinge cover and a latch member according to an embodiment of the disclosure.

The hinge bracket 350 of FIG. 12 may be referred to as the hinge bracket 350 of FIGS. 5 to 9B. The hinge cover 370 of FIGS. 10 to 12 may be referred to as the hinge cover 370 of FIG. 5. The connection assembly 360 of FIGS. 10 to 12 may be referred to as the connection assembly 360 of FIG. 5.

In an embodiment, the hinge cover 370 may be detachably coupled to the hinge bracket 350 by using the connection assembly 360 and the release hole 371a. Hereinafter, an example where the connection assembly 360 is coupled to the hinge cover 370 will be mainly described, but in an embodiment (e.g., see FIGS. 20 to 24B), the connection assembly 360 may be coupled to the hinge bracket 350. In the embodiments disclosed herein, the connection assembly 360 of the hinge bracket 350 and the hinge cover 370 may include coupling structures engaged with each other to be coupled and decoupled. Hereinafter, an example where the hinge bracket 350 and the connection assembly 360 of the hinge cover 370 are engaged with each other using hook structures (e.g., the first connection portion 361b and the second coupling portion 354) is disclosed, but this is merely an example and is not limited thereto. The connection assembly 360 of the hinge bracket 350 and the hinge cover 370 disclosed herein may be detachably coupled to each other using various types of mechanical fastening structures.

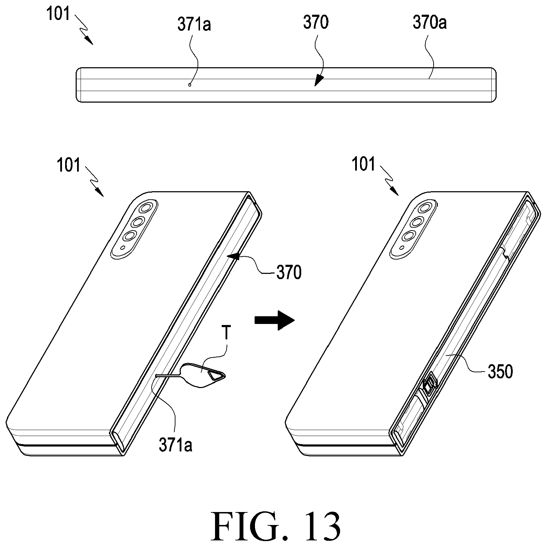

Referring to FIGS. 10 to 12, in an embodiment, the hinge cover 370 may be disposed on the second surface 350b of the hinge bracket 350. In an embodiment, the hinge cover 370 may include a third surface facing the second surface 350b and a fourth surface facing in the direction opposite to the direction the third surface faces and may form a portion of the exterior of the electronic device 101. According to an embodiment, the hinge cover 370 may include a coupling area 371 where the connection assembly 360 is seated and a release hole 371a (e.g., the release hole 371a of FIG. 12). For example, the connection assembly 360 may be disposed on the third surface of the hinge cover 370. For example, the coupling area 371 may be a recess formed on the third surface so that the connection assembly 360 is seated thereon. In an embodiment, the release hole 371a (e.g., the release hole 371a of FIG. 13) may be formed in a portion of an area overlapping the release member 365 of the connection assembly 360. The release hole 371a (e.g., the release hole 371a of FIG. 13) may be formed to penetrate from the third surface to the fourth surface.

Referring to FIG. 12, in an embodiment, the hinge bracket 350 may include a connection opening 351 where the latch member 361 of the connection assembly 360 and/or a second connection portion 353 mechanically coupled to the first connection portion 361b of the latch member 361 is accommodated. According to an embodiment, the connection opening 351 may be formed through a portion of the area of the hinge bracket 350 overlapping the connection assembly 360 from the first surface 350a to the second surface 350b. Referring to FIG. 12, some components (e.g., the latch member 361 and/or the latch cover 362) of the connection assembly 360 may protrude to the first surface 350a of the hinge cover 370 through the connection opening 351. According to an embodiment, the second connection portion 353 of the hinge bracket 350 may be disposed adjacent to the connection opening 351. For example, the second connection portion 353 may include a portion where a partial area of the first surface 350a extends toward the display (e.g., in the +Z direction) and an end portion protruding toward the connection assembly 360 (e.g., in the + Y direction) to hang on the first connection portion 361b. For example, the first connection portion 361b may be engaged withthe second connection portion 353 in a manner to hang on an upper surface (e.g., a surface in the +Z direction) of the second connection portion 353.

Referring to FIGS. 10 to 12, in an embodiment, the connection assembly 360 may include a latch member 361, a latch cover 362, a first spring 363, a second spring 364, and/or a release member 365.

In an embodiment, the latch member 361 may include a support portion 361a seated inside the latch cover 362 and/or a first connection portion 361b extending from the support portion 361a. According to an embodiment, the first connection portion 361b may include a portion extending from the support portion 361a toward the hinge bracket 350 (e.g., in the +Z-axis direction) and/or an end portion of the connection assembly 360 protruding outward of the member (e.g., in the +Y-axis direction). According to an embodiment, a portion (e.g., an end portion) of the first connection portion 361b may hang on an end portion of the second connection portion 353 of the hinge bracket 350. For example, in a state where the hinge cover 370 is attached to the hinge bracket 350, the first connection portion 361b may protrude through the connection opening 351 of the hinge bracket 350, and an end portion of the first connection portion 361b may be engaged with the second connection portion 353 in a manner to hang on the end portion of the second connection portion 353.

In an embodiment, the latch cover 362 may include an accommodation space 362a thataccommodates the release member 365, the first spring 363, the second spring 364, and/or at least a portion (e.g., the support portion 361a) of the latch member 361. For example, at least a portion of one sidewall (e.g., a wall in the -Z direction) of the latch cover 362 may be open in the accommodation space 362a. According to an embodiment, a portion of the opening of the latch cover 362, the release member 365, and the release hole 371a formed in the hinge cover 370 may overlap and/or be aligned with respect to one axis (e.g., the thickness direction or the Z axis of the electronic device 101).

For example, a portion of the accommodation space 362a may be formed to guide anascending/descending motion (e.g., the Z-axis motion) of the release member 365. For example, the release member 365 may be positioned between the release hole 371a and the second spring 364 while being accommodated in the accommodation space 362a. For example, the second spring 364 may be disposed between the release member 365 and one sidewall (e.g., a wall in the +Z direction) of the latch cover 362. For example, the second spring 364, the release member 365, and the release hole 371a may overlap and/or be aligned with respect to one axis (e.g., the thickness direction or the Z axis of the electronic device 101). According to an embodiment, the second spring 364 may provide the release member 365 with an elastic force acting in the thickness direction (e.g., the Z-axis direction) of the electronic device 101.

For example, a portion of the accommodation space 362a of the latch cover 362 may be formed to accommodate and/or support a portion (e.g., the support portion 361a) of the latch member 361. A space where the latch member 361 is accommodated in a portion of the accommodation space 362a may be formed to guide a horizontal movement (e.g., a Y-axis movement) of the latch member 361. For example, a portion of the accommodation space 362a may be open to, at least, one sidewall (e.g., a wall in the +Z direction) of the latch cover 362. For example, the first connection portion 361b of the latch member 361 may protrude through the opening of the latch cover 362. For example, the latch member 361 may be disposed to face one sidewall (e.g., a wall in the +Y direction) of the latch cover 362 with the first spring 363 interposed therebetween. According to an embodiment, the first spring 363 may provide an elastic force acting in the length direction (e.g., the Y-axis direction) of the electronic device 101 to the latch member 361. For example, protrusions supporting the first spring 363 may be formed on one sidewall (e.g., a wall in the +Y direction) of the latch cover 362 and one surface of the latch member 361, respectively,which face each other.

Referring to FIG. 12, the hinge cover 370 may include at least one latch member 361 and a first coupling portion 372 in an area spaced apart from the latch member 361 in the length direction (e.g., the Y-axis direction) of the electronic device 101. According to an embodiment, the hinge bracket 350 may include a second coupling portion 354 in an area overlapping the first coupling portion 372. For example, the second coupling portion 354 of the hinge bracket 350 may have a form where a partial area of the first surface 350a of the hinge bracket 350 protrudes toward the display (e.g., toward the +Z direction). For example, the first coupling portion 372 of the hinge cover 370 may include a portion where a partial area of the third surface of the hinge cover 370 extends toward the display (e.g., toward the +Z direction). The first coupling portion 372 may include an end portion protruding toward the first coupling portion 372 to hang on an end portion of the second coupling portion 354. For example, in a state where the hinge cover 370 is attached to the hinge bracket 350, the first coupling portion 372 may hang on and be engaged with the second coupling portion 354. For example, the first coupling portion 372 may be snap-fitted to the second coupling portion 354. As an example, after the second coupling portion 354 is coupled to hang on the first coupling portion 372, the hinge cover 370 may be attached to the hinge bracket 350 by coupling the first connection portion 361b of the latch member 361 and the second connection portion 353 of the hinge bracket 350.

However, the configuration of the hinge cover 370 is not limited to the above-described embodiment. In an embodiment, the hinge cover 370 may include a plurality (e.g., two) connection assemblies 360 spaced apart from each other in the length direction of the electronic device 101. For example, the first coupling portion 372 of the hinge cover 370 and/or the second coupling portion 354 of the hinge bracket 350 may be omitted.

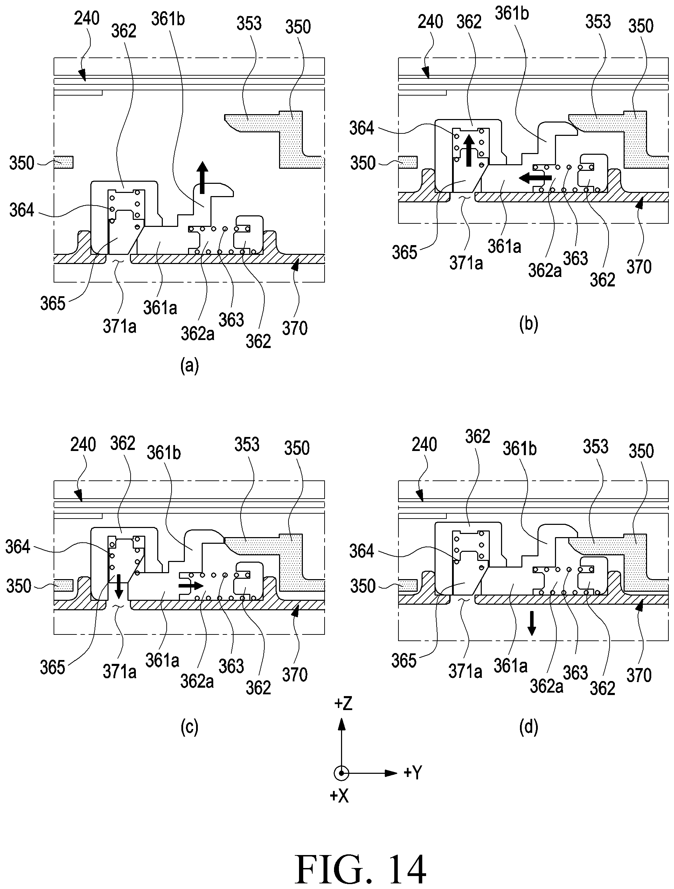

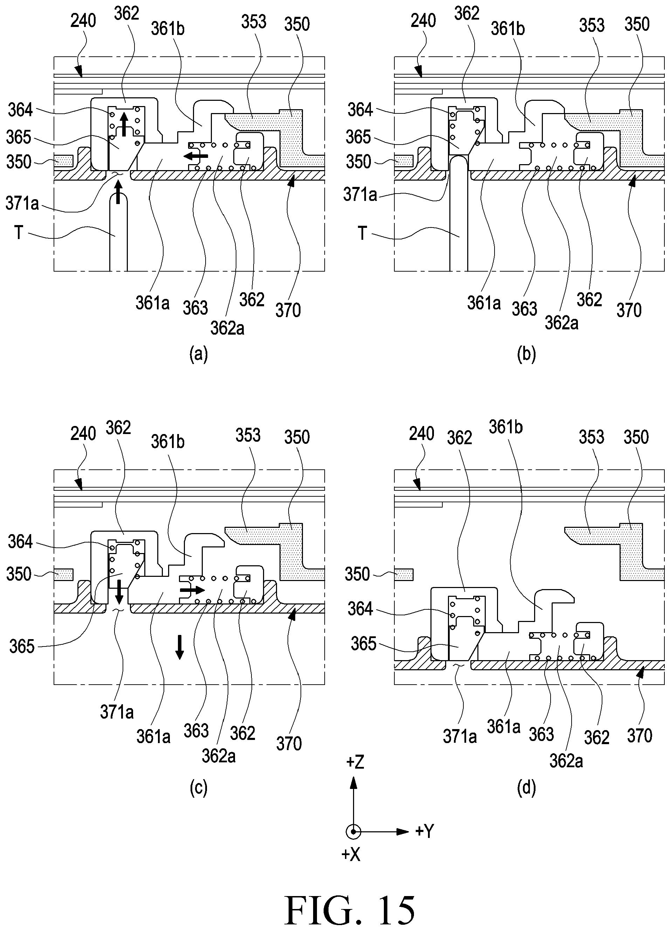

FIG. 13 is a view illustrating a state in which a cover member is attached to an electronic device in a folded state and a state in which the cover member is removed from the electronic device according to an embodiment of the disclosure. FIG. 14 is a cross-sectional view illustrating a process of attaching a hinge cover to a hinge bracket of an electronic device according to an embodiment of the disclosure. FIG. 15 is a cross-sectional view illustrating a process of removing a hinge cover from a hinge bracket according to an embodiment of the disclosure.

The hinge cover 370 of FIGS. 13 to 15 may be referred to as the hinge cover 370 of FIGS. 5 and 10 to 12. The hinge bracket 350 of FIGS. 14 and 15 may be referred to as the hinge bracket 350 of FIG. 12. The connection assembly 360 of FIGS. 10 to 12 may be referred to as the connection assembly 360 of FIGS. 14 and 15.

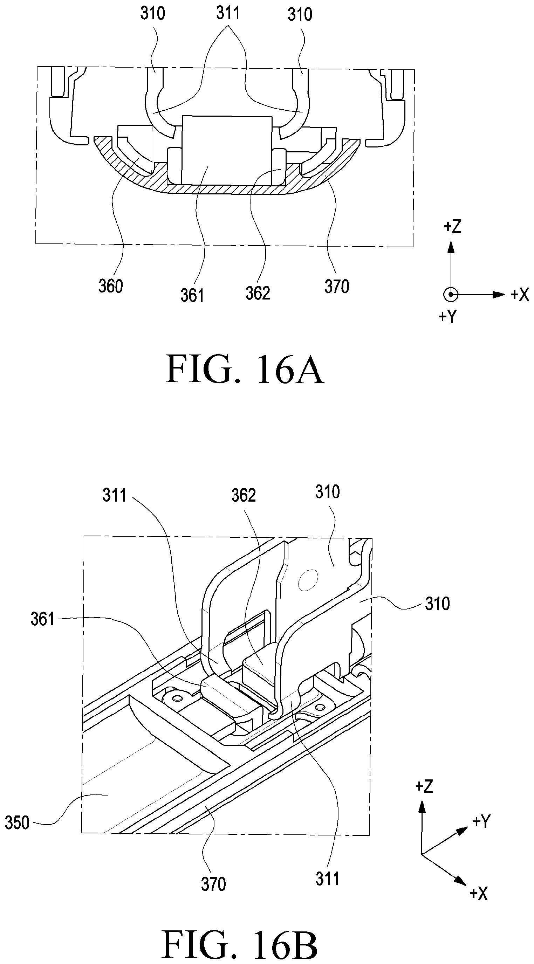

Referring to FIG. 13, in an embodiment, the hinge cover 370 may be removable from the hinge bracket 350 using an insertion tool T. According to an embodiment, as is described below with reference to FIGS. 16A to 19B, the hinge cover 370 may be formed to be detachable from the hinge bracket 350 when the electronic device 101 is in the folded state (e.g., FIG. 13). For example, the release hole 371a may be a hole exposed to the fourth surface of the hinge cover 370 and formed through the third surface, and may overlap the release member 365 disposed inside the latch cover 362. For example, the size and shape of the release hole 371a may be formed to correspond to the size and shape of the insertion tool T inserted into the release hole 371a. According to an embodiment, the insertion tool T may pass through the release hole 371a to contact the release member 365 of the latch member 361, and may press the release member 365 in the inserted direction (e.g., +Z direction). For example, the insertion tool T may be a pin member having a tiny diameter. For example, the insertion tool T may be a pin for releasing a sim tray. According to an embodiment, by forming the release hole 371a in a tiny size, it is possible to prevent the release member 365 of the connection assembly 360 disposed inside the release hole 371a from being unwantedly pressed.

FIG. 14(a) to (d) may sequentially illustrate a process of coupling the hinge cover 370 to the hinge bracket 350 using the connection assembly 360 according to an embodiment. FIG. 15(a) to (d) may sequentially illustrate a process of removing the hinge cover 370 from the hinge bracket 350 using the connection assembly 360 and the insertion tool T according to an embodiment.

Referring to FIGS. 14 and 15, the release member 365 may be changed between the original position (e.g., (a), (b) and (d) of FIG. 14, (a) and (d) of FIG. 15) and the raised position (e.g., (c) of FIG. 14, and (b) and (c) of FIG. 15). For example, the release member 365 may be changed from the original position to the raised position by the force received from the latch member 361 and/or the pressing force by the insertion tool T. For example, the release member 365 may be changed from the raised position to the original position due to the elastic force of the first spring 363 and/or the second spring 364.

Referring to FIGS. 14 and 15, in an embodiment, the first connection portion 361b of the latch member 361 and the second connection portion 353 of the hinge bracket 350 may include inclined surfaces engaged with each other at end portions thereof. For example, the respective inclined surfaces of the first connection portion 361b and the second connection portion 353 may convert an upward and downward movement (e.g., a movement in the Z-axis direction) of the latch member 361 into a horizontal movement (e.g., a movement in the Y-axis direction) of the latch member 361 or vice versa. According to an embodiment, the respective inclined surfaces of the first connection portion 361b and the second connection portion 353 may be formed to perform a horizontal movement (e.g., a movement in the -Y direction) such that the latch member 361 moves away from the second connection portion 353 when the latch member 361 ascends. The respective inclined surfaces of the first connection portion 361b and the second connection portion 353 may be formed to horizontally move (e.g., move in the +Y direction) such that the latch member 361 approaches the second connection portion 353 when the latch member 361 descends. For example, the respective inclined surfaces of the first connection portion 361b and the second connection portion 353 may have a planar shape inclined toward the first connection portion 361b with respect to the ascending direction of the latch member 361 (e.g., with respect to the +Z axis direction).

Referring to FIGS. 14 and 15, in an embodiment, the release member 365 and the support portion 361a of the latch member 361 may include inclined surfaces that are engaged with each other. For example, the respective inclined surfaces of the release member 365 and the latch member 361 may convert an up-and-down movement (e.g., a Z-axis direction movement) of the release member 365 into a horizontal movement (e.g., a Y-axis direction movement) of the latch member 361 or vice versa. According to an embodiment, the respective inclined surfaces of the release member 365 and the support portion 361a may be formed such that the latch member 361 moves horizontally (e.g., moves in the -Y direction) toward a position (original position) before the release member 365 ascends when the release member 365 ascends. Conversely, the respective inclined surfaces of the release member 365 and the support portion 361a may be formed such that the latch member 361 moves horizontally (e.g., moves in the +Y direction) in a direction away from the release member 365 when the release member 365 descends. For example, the respective inclined surfaces of the first connection portion 361b and the second connection portion 353 may have a planar shape inclined toward the support portion 361a of the latch member 361 with respect to the ascending direction of the releasing member 365 (e.g., with respect to the +Z axis direction).

Referring to FIG. 14(a), in an embodiment, the hinge cover 370 may be coupled to the hinge bracket 350 in the arrow direction (e.g., +Z direction) of FIG. 14A such that a portion (e.g., a portion of the latch cover 362 and the latch member 361) of the connection assembly 360 is disposed in the connection opening 351. Referring to FIG. 14(b), when the latch member 361 ascends, as the inclined surface of the first connection portion 361b slides in contact with the inclined surface of the second connection portion 353, the latch member 361 may be displaced in the arrow direction (e.g., -Y direction) of FIG. 14(b). As the latch member 361 moves in the arrow direction (e.g., -Y direction) of FIG. 14(b) and the inclined surface of the releasing member 365 slides along the inclined surface of the support portion 361a, the releasing member 365 may be raised in the arrow direction (e.g., +Z direction) of FIG. 14(b). Accordingly, the first spring 363 may be extended and the second spring 364 may be compressed. Referring to FIG. 14(c), in a state in which the hinge cover 370 is sufficiently close to the hinge bracket 350, the inclined surfaces of the first connection portion 361b and the second connection portion 353 may be separated so as not to be in contact with each other. As shown in FIG. 14(d), the release member 365 may descend to its original position, and the latch member 361 may move away from the release member 365 (e.g., in the +Y direction) by the elastic force caused by the restoration of the first spring 363 that has been extended and/or the second spring 364 that has been compressed. Referring to FIG. 14(d), coupling between the hinge cover 370 and the hinge bracket 350 may be complete in a form in which the first connection portion 361b hangs on the second connection portion 353 of the hinge bracket 350.

In an embodiment, the separation of the hinge cover 370 may be performed by changing the release member 365 to the raised position using, for example, the insertion tool T. Referring to FIG. 15(a), for example, the insertion tool T may be inserted into the release hole 371a in the arrow direction (e.g., +Z direction) of FIG. 15A. Referring to FIG. 15(b), the release member 365 may be pressed by the insertion tool T to be raised and moved from the original position to the raised position. Accordingly, the first spring 363 may be extended and the second spring 364 may be compressed. When the release member 365 ascends, the inclined surface of the support portion 361a may slide in contact with the inclined surface of the release member 365. Accordingly, the latch member 361 may move toward the position (original position) (e.g., in the -Y direction) before the release member 365 ascends. Referring to FIG. 15(b), in the state in which the latch member 361 has sufficiently moved toward the position (original position) before the release member 365 ascends (e.g., in the -Y direction), the respective inclined surfaces of the first connection portion 361b and the second connection portion 353 may be separated so as not to be in contact with each other. Referring to FIG. 15(c), the insertion tool T may be removed, and the cover member may be separated in the arrow direction (e.g., -Z direction) of FIG. 15(c). As the insertion tool T is removed, the release member 365 may be lowered to its original position, and the latch member 361 may be moved away from the release member 365 (e.g., in the +Y direction) as shown in FIG. 15(d) by the elastic force caused by the restoration of the first spring 363 that has been extended and/or the second spring 364 that has been compressed. FIG. 15(d) illustrates a state in which the hinge cover 370 is completely removed from the hinge bracket 350.

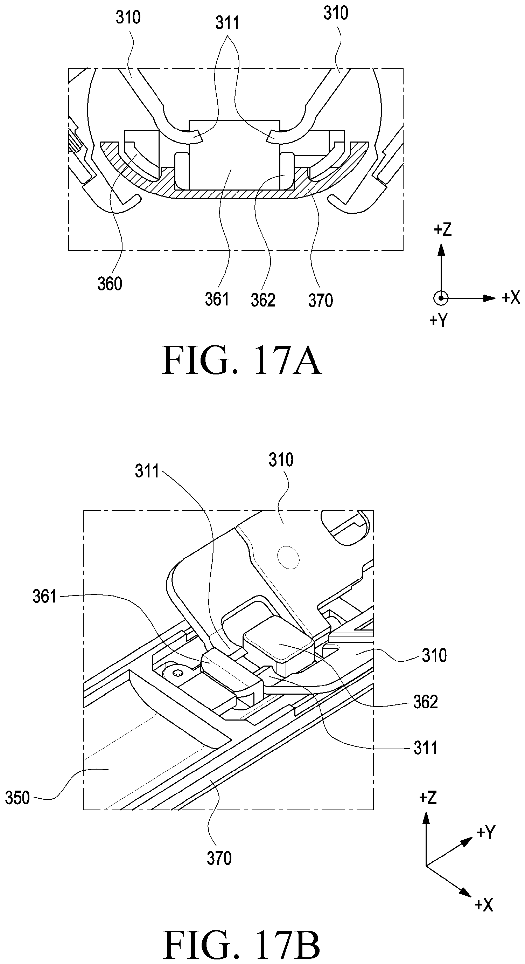

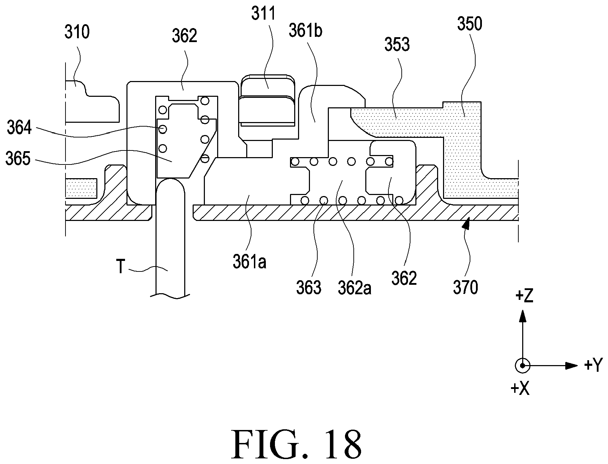

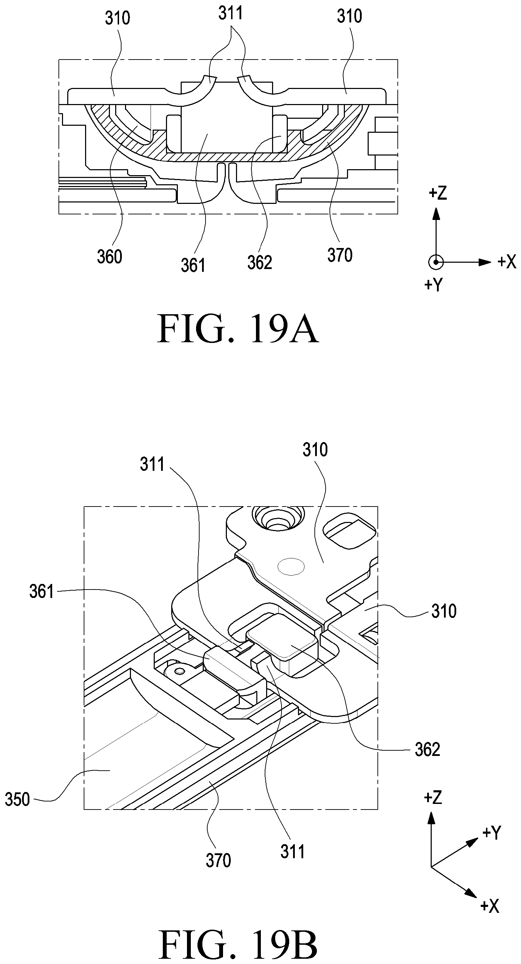

FIGS. 16A and 16B are a cross-sectional view and a perspective view illustrating a hinge module when an electronic device is in a folded state according to an embodiment of the disclosure. FIGS. 17A and 17B are a cross-sectional view and a perspective view illustrating a hinge module when an electronic device is in an intermediate state according to an embodiment of the disclosure. FIG. 18 is a cross-sectional view illustrating a state of a hinge module in an intermediate state of an electronic device according to an embodiment of the disclosure. FIGS. 19A and 19B are a cross-sectional view and a perspective view illustrating a hinge module when an electronic device is in an unfolded state according to an embodiment of the disclosure.

The hinge bracket 350 of FIGS. 16 to 19 may be referred to as the hinge bracket 350 of FIGS. 14 and 15. The hinge cover 370 of FIGS. 16 to 19 may be referred to as the hinge cover 370 of FIGS. 13 to 15. The connection assembly 360 of FIGS. 16 to 19 may be referred to as the connection assembly 360 of FIGS. 10 to 12.

Referring to FIGS. 16A to 19B, in an embodiment, the hinge assembly 301 and the connection assembly 360 may be formed to allow separation of the hinge cover 370 and the hinge bracket 350 only in a specific state (e.g., the folded state of FIG. 3) of the electronic device 101. According to an embodiment, at least one rotation member (e.g., the 1-1th rotation member 231a, the 1-2th rotation member 231b, the 2-1th rotation member 232a, and/or the 2-2th rotation member 232b of FIG. 4) of the first hinge modules 310 and 320 may include at least one locking member 311. For example, the locking member 311 may be formed to restrict the movement of the latch member 361 in a specific state (e.g., an intermediate state (not shown) and/or the unfolded state of FIG. 2) of the electronic device 101. For example, a plurality (e.g., a pair) of locking members 311 may be provided, and the pair of locking members 311 may be formed in portions of the first hinge module 310 and 320, respectively.

Referring to FIGS. 16A and 16B, in the folded state of the electronic device 101, the locking portion of the rotation member may not overlap the latch member 361. For example, the locking portion may not block the space between the latch member 361 and the latch cover 362 in the folded state of the electronic device 101, and the locking portion may allow a horizontal motion (e.g., a motion in the -Y direction) of the latch member 361 toward the release member 365. Accordingly, in the folded state of the electronic device 101, for example, the hinge cover 370 may be released from the hinge bracket 350 using the insertion tool T.

FIG. 18 illustrates the connection assembly 360 when the insertion tool T is inserted into the release hole 371a of the hinge cover 370 when the electronic device 101 is in the intermediate state. Referring to FIGS. 17A to 19B, when the electronic device 101 is in the unfolded state and/or the intermediate state, the locking portion of the rotation member of the hinge module may be inserted into the space between the latch member 361 and the latch cover 362. In the states of FIGS. 17A to 19B, the locking portion may block horizontal motion (e.g., motion in the -Y direction) of the latch member 361 toward the release member 365. For example, even when the release member 365 is raised to the raised position with the insertion tool T, the latch member 361 may not be displaced. Accordingly, in the unfolded state and/or the intermediate state of the electronic device 101, the engagement coupling between the first connection portion 361b and the second connection portion 353 may be maintained.

In the embodiment illustrated in FIGS. 16A to 19B, the state of the electronic device 101 in which the hinge cover 370 may be removed from the cover bracket is illustrated as the folded state, but this is not limiting, and may be changed to the intermediate state and/or the unfolded state.

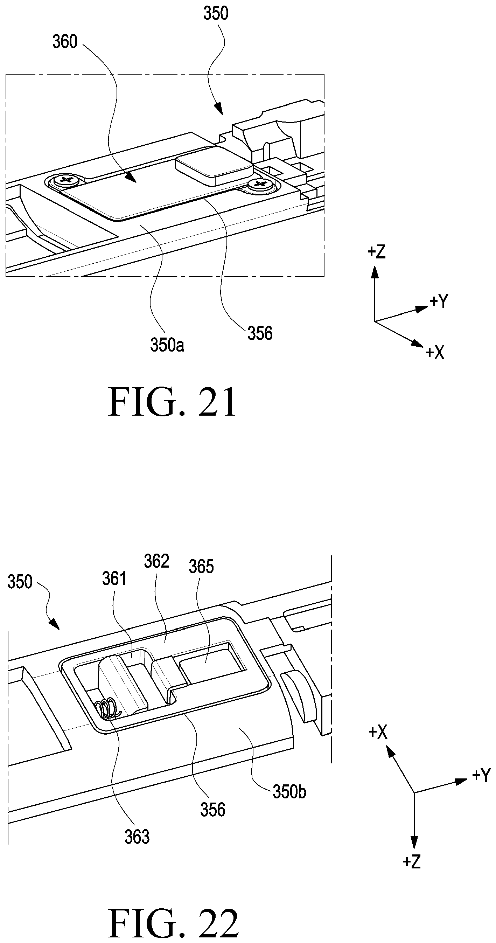

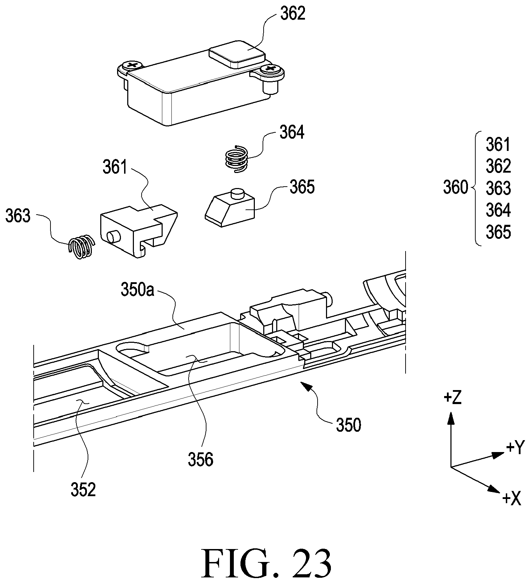

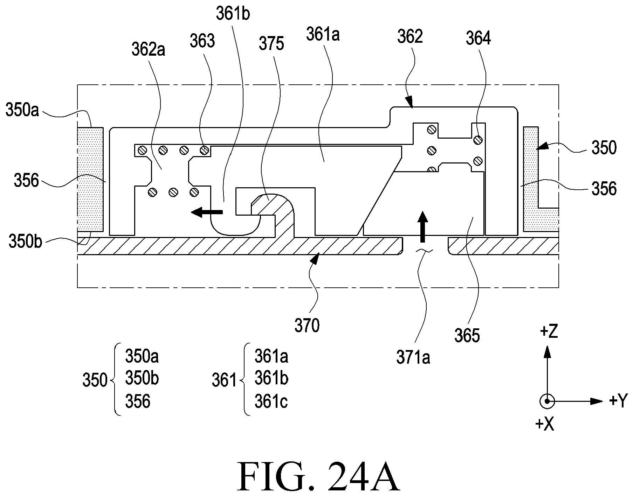

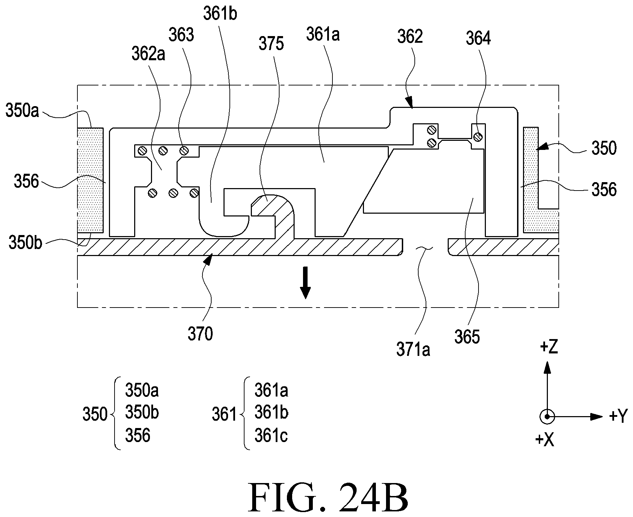

FIG. 20 is a perspective view illustrating a hinge bracket, connection assembly, and hinge cover of an electronic device according to an embodiment of the disclosure. FIG. 21 is an enlarged view illustrating the hinge bracket and the connection assembly of FIG. 20. FIG. 22 is a perspective view of the hinge bracket and the connection assembly of FIG. 21 viewed at a different angle. FIG. 23 is an exploded perspective view illustrating the hinge bracket and connection assembly of FIG. 20. FIGS. 24A and 24B are cross-sectional views illustrating a hinge bracket, connection assembly, and hinge cover of an electronic device according to an embodiment of the disclosure.

The configuration of the hinge bracket 350 of FIGS. 20 to 25B may be identical in whole or part to the configuration of the hinge bracket 350 of FIGS. 16 to 19. The configuration of the hinge cover 370 of FIGS. 20, 24A, and 24B may be identical in whole or part to the configuration of the hinge cover 370 of FIGS. 16 to 19. The configuration of the connection assembly 360 of FIGS. 20 to 25B may be identical in whole or part to the configuration of the connection assembly 360 of FIGS. 16 to 19 and the connection assembly 360 of FIGS. 10 to 12.

Referring to FIGS. 20 to 22, the connection assembly 360 may be coupled to the hinge bracket 350. For example, the hinge bracket 350 may include a coupling opening 356 through which at least a portion of the coupling assembly 360 is accommodated. For example, the coupling opening 356 may be formed to penetrate from the first surface 350a to the second surface 350b of the hinge bracket 350. For example, the coupling opening 356 may be formed to accommodate and surround the connection assembly 360 therein, and at least a portion of the coupling opening 356 may correspond to the shape of the connection assembly 360. For example, a portion of the connection assembly 360 (e.g., a portion of the latch cover 362) may be coupled to the coupling opening 356 or a portion of the hinge bracket 350 adjacent thereto in various ways. For example, the connection assembly 360 may be coupled to a portion of the hinge bracket 350 through a fixing means (e.g., a fixing screw). However, the coupling structure between the connection assembly 360 and the hinge bracket 350 is not limited to the above description, and various coupling means including a fixing screw may be applied.

Referring to FIGS. 20, 24A, and 24B, the hinge cover 370 may include a third connection portion 375 and a release hole 371a (e.g., the release hole 371a of FIG. 12) engaged with the first connection portion 361b of the connection assembly 360.

Referring to FIG. 23, in an embodiment, the connection assembly 360 may include a latch member 361, a latch cover 362, a first spring 363, a second spring 364, and/or a release member 365.

In an embodiment, the latch member 361 may include a support portion 361a seated inside the latch cover 362 and/or a first connection portion 361b extending from the support portion 361a. According to an embodiment, the first connection portion 361b may include a portion extending from the support portion 361a toward the hinge cover 370 (e.g., in the -Z-axis direction) and/or an end portion of the connection assembly 360 protruding outward of the member (e.g., in the +Y-axis direction). According to an embodiment, a portion (e.g., an end portion) of the first connection portion 361b may hang on an end portion of the third connection portion 375 (e.g., see FIGS. 24A and 24B) of the hinge cover 370. For example, in a state in which the hinge cover 370 is attached to the hinge bracket 350, an end portion of the third connection portion 375 of the hinge cover 380 may be engaged and coupled in such a way that the end portion of the third connection portion 375 of the hinge cover 370 hangs on the end portion of the first connection portion 361b of the latch member 361.

In an embodiment, the first connection portion 361b and the third connection portion 375 may be formed to include hook structures in which end portions thereof are engaged with each other. However, the form of the first connection portion 361b and/or the third connection portion 375 is not limited to the example disclosed herein, and may be formed in various forms that may be detachably coupled to each other.

In an embodiment, the latch cover 362 may include an accommodation space 362a that accommodates at least a portion of the release member 365, the first spring 363, the second spring 364, and/or the latch member 361. For example, at least a portion of one sidewall (e.g., a wall in the -Z direction) of the latch cover 362 may be open in the accommodation space 362a. According to an embodiment, a portion of the opening of the latch cover 362, the release member 365, and the release hole 371a formed in the hinge cover 370 may overlap and/or be aligned with respect to one axis (e.g., the thickness direction or the Z axis of the electronic device 101).

For example, the accommodation space 362a of the latch cover 362 may be formed to guide the ascending/descending motion (e.g., the Z-axis motion) of the release member 365. For example, the release member 365 may be positioned between the release hole 371a and the second spring 364 while being accommodated in the accommodation space 362a. For example, the second spring 364 may be disposed between the release member 365 and one sidewall (e.g., a wall in the +Z direction) of the latch cover 362. According to an embodiment, the second spring 364 may provide the release member 365 with an elastic force acting in the thickness direction (e.g., the Z-axis direction) of the electronic device 101.

For example, a portion of the accommodation space 362a of the latch cover 362 may be formed to accommodate and/or support a portion (e.g., the support portion 361a) of the latch member 361. A space where the latch member 361 is accommodated in a portion of the accommodation space 362a may be formed to guide a horizontal movement (e.g., a Y-axis movement) of the latch member 361. For example, the latch member 361 may be disposed to face one sidewall (e.g., a wall in the -Y direction) of the latch cover 362 with the first spring 363 interposed therebetween. According to an embodiment, the first spring 363 may provide an elastic force acting in the length direction (e.g., the Y-axis direction) of the electronic device 101 to the latch member 361. For example, protrusions supporting the first spring 363 may be formed on one sidewall (e.g., a wall in the -Y direction) of the latch cover 362 and one surface of the latch member 361, respectively, which face each other.

Referring to FIGS. 24A and 24B, the release member 365 may be changed between the original position (e.g., the state of FIG. 24A) and the raised position (e.g., the state of FIG. 24B). For example, the release member 365 may be changed from the original position to the raised position by the force received from the latch member 361 and/or the pressing force by the insertion tool T (e.g., the insertion tool T of FIG. 18). For example, the release member 365 may be changed from the raised position to the original position due to the elastic force of the first spring 363 and/or the second spring 364.

Referring to FIGS. 24A and 24B, in an embodiment, the support portion 361a and the release member 365 of the latch member 361 may include inclined surfaces engaged with each other. For example, the respective inclined surfaces of the support portion 361a of the latch member 361 and the release member 365 may be formed to convert the ascent (e.g., movement in the +Z axis direction) of the release member 365 into a horizontal movement (e.g., movement in the -Y axis direction) of the latch member 361. Conversely, the respective inclined surfaces of the support portion 361a of the latch member 361 and the release member 365 may be formed to convert the descent (e.g., movement in the -Z-axis direction) of the release member 365 into a horizontal movement (e.g., movement in the +Y-axis direction) of the latch member 361. For example, the respective inclined surfaces of the support portion 361a of the latch member 361 and the release member 365 may have a planar shape inclined toward the release member 365 with respect to the ascending direction of the release member 365 (e.g., with respect to the +Z axis direction).

Referring to FIGS. 24A and 24B, in an embodiment, the hinge cover 370 may be attached to the hinge bracket 350 such that the third connection portion 375 of the hinge cover 370 is engaged with an end portion of the first connection portion 361b. For example, the respective end portions of the first connection portion 361b of the latch member 361 and the third connection portion 375 of the hinge cover 370 may be formed such that areas in contact with each other include a curved surface. For example, the hinge cover 370 may be attached to the hinge bracket 350 by pressing the hinge cover 370 toward the hinge bracket 350. For example, when the hinge cover 370 is raised (e.g., moved in the +Z direction), the end portion of the third connection portion 375 may be in contact with the end portion of the first connection portion 361b, and the latch member 361 may be horizontally moved (e.g., moved in the -Y direction) along the curved surface formed at each end portion. Accordingly, the first spring 363 may be compressed in the horizontal movement direction (e.g., the Y-axis direction) of the latch member 361. By the horizontal movement (e.g., the movement in the -Y direction) of the latch member 361, an end portion of the third connection portion 375 may be engaged with the third connection portion 375 in a manner to hang on the end portion of the first connection portion 361b, and the latch member 361 may be horizontally moved (e.g., the movement in the +Y direction) by receiving the elastic force of the first spring 363 to return to its original position.

Referring to FIG. 24B, the hinge cover 370 may be removed in the direction of the arrow of FIG. 24B by releasing the coupling between the first connection portion 361b and the third connection portion 375. For example, the insertion tool T (e.g., the insertion tool T of FIG. 18) may be passed through the release hole 371a of the hinge cover 370 to press the release member 365 to raise the release member 365. For example, when the release member 365 rises, the second spring 364 may be compressed in the moving direction (e.g., the Z-axis direction) of the release member 365. When the release member 365 is raised, the latch member 361 may be horizontally moved (e.g., moved in the -Y direction) as the respective inclined surfaces of the latch member 361 and the release member 365 are engaged with each other. As the latch member 361 moves horizontally (e.g., moves in the -Y direction), the first spring 363 may be compressed in the horizontal movement direction (e.g., the Y-axis direction) of the latch member 361, and the coupling of the respective end portions of the first connection portion 361b and the third connection portion 375 may be released. In a state where the coupling of the first connection portion 361b and the third connection portion 375 is released, the hinge cover 370 may be removed from the hinge bracket 350 in the direction of the arrow of FIG. 24B. For example, when the pressing force on the release member 365 by the insertion tool T (e.g., the insertion tool T of FIG. 18) is removed, the release member 365 and the latch member 361 may be moved from the state of FIG. 24B to the state of FIG. 24A, respectively, by the elastic force of the first spring 363 member and/or the second spring 364, which has been compressed.

In a foldable electronic device, a waterproof structure is generally applied to internal electrical and electronic components that are vulnerable to water penetration. For example, the waterproof structure may block external foreign substances, including fine dust, as well as external moisture. For example, in the foldable electronic device, the area where the hinge assembly and the hinge cover are disposed is relatively less vulnerable to water penetration, and thus the waterproof structure may not be applied. Therefore, foreign substances introduced from the outside of the electronic device may penetrate the hinge assembly, and the foreign substances may accumulate in gaps in hinge components (e.g., rails, cams, and spring members). Since the foreign substance may adversely affect the operation of the hinge assembly, it is necessary to remove it through washing. The hinge assembly may be generally disposed between the display assembly disposed on the front surface of the electronic device and the hinge cover disposed on the rear surface of the electronic device. Therefore, access to the hinge assembly is generally followed by a hassle to remove the display assembly. For example, to wash hinge components such as a rail, a cam, or a spring member, it is necessary to separate a rotating member disposed in front of the hinge component and coupled (e.g., screwed) to the housing.

An embodiment of the disclosure provides a hinge cover that is detachably connected to the hinge assembly so that the hinge assembly may be accessed through the rear surface of the electronic device, and an electronic device including the hinge cover.

An embodiment of the disclosure provides a hinge bracket and a device including the hinge bracket, in which the hinge bracket is formed as a single component where a plurality of hinge components (or hinge modules) are disposed to be spaced apart and coupled together to protect the flexible circuit board not to be exposed to the outside of the electronic device when the hinge cover is removed, and the area of the hinge bracket overlapping the flexible circuit board is formed to have a smaller thickness than that of the other areas to secure a space for disposing the flexible circuit board.

According to an embodiment of the disclosure, an electronic device 101 may comprise a first housing 210, a second housing 220, at least one hinge module (the first hinge module 231 and 232 and/or the second hinge module 233 of FIG. 4, the first rotation structure 310 of FIGS. 5, 6, and 16A to 19, the second rotation structure 320 of FIGS. 5 and 6, and/or the second hinge module 330 of FIGS. 5 and 6) disposed between the first housing and the second housing and configured to rotatably connect the first housing and the second housing to each other, a flexible circuit board 270 disposed in the first housing and the second housing, a hinge bracket (the hinge bracket 235 of FIG. 4 and/or the hinge bracket 350 of FIGS. 5 to 9B and 11), and/or a hinge cover (the hinge cover 203 of FIG. 4 and/or the hinge cover 370 of FIGS. 5, 10, 12 to 20, 24A, and 24B). The hinge bracket may include a first surface (350a of FIGS. 6 to 7A, 8A, and 9A) to which at least one hinge module is coupled and a second surface (350b of FIGS. 7B, 8B, and 9B) facing in a direction opposite to a direction in which the first surface faces. The hinge cover may be detachably disposed on the second surface. The flexible circuit board may be disposed on an area of the first surface spaced apart from the hinge module, and the hinge bracket is disposed to intervene between the flexible circuit board and the hinge cover. For example, the flexible circuit board 270 may overlap at least a partial area of the hinge bracket (e.g., the hinge bracket 235 of FIG. 4 and/or the hinge bracket 350 of FIGS. 5 to 9B and 11) of the flexible circuit board 270 with respect to a direction downward to the display 240 (e.g., the thickness direction or Z-axis direction of the electronic device 101). For example, the flexible circuit board may not be exposed to the second surface of the hinge bracket.

In an embodiment, the flexible circuit board may be exposed to the second surface of the hinge bracket. For example, the flexible circuit board may be exposed to the second surface of the hinge bracket through an opening formed to penetrate from the first surface of the hinge bracket to the second surface of the hinge bracket. For example, the opening at least partially overlapping the flexible circuit board may be formed in a seating area (the seating area 352 of FIGS. 5 to 9 and/or the seating area 352 of FIG. 20).

According to an embodiment, the hinge bracket includes at least one seating area (the seating area 352 of FIGS. 5 to 9 and/or the seating area 352 of FIG. 20) configured to accommodate at least a portion of the flexible circuit board. The seating area may include groove-shaped depression extending from the first surface toward the second surface.

According to an embodiment, the seating area may include an opening formed to penetrate from the first surface to the second surface and/or at least one plate member (the plate member 340 of FIGS. 8A and 9B). The plate member may be formed to close the opening and accommodate at least a portion of the flexible circuit board.

According to an embodiment, a portion of the plate member overlapping the seating area may be formed to close the seating area. A remaining portion of the plate member that does not overlap the seating area may surround a portion of the first surface.

According to an embodiment, a portion of the plate member overlapping the seating area may be formed to close the seating area. A remaining portion of the plate member that does not overlap the seating area may surround a portion of the second surface. According to an embodiment, a plurality of hinge modules may be provided. The plurality of hinge modules are spaced apart from each other on the first surface of the hinge bracket.

According to an embodiment, the electronic device may further comprise a connection assembly (the connection assembly 360 of FIGS. 5, 10, and 11 and/or the connection assembly 360 of FIGS. 20 to 23) disposed between the hinge bracket and the hinge cover. The hinge cover may include at least one release hole (the release hole 371a of FIGS. 12 to 15 and 18 and/or the release hole 371a of FIGS. 24A and 24B) formed through to overlap a portion of the connection assembly.

According to an embodiment, the connection assembly may be coupled to a portion of the hinge cover. The connection assembly may include a latch member 361 including a first connection portion (the first connection portion 361b of FIGS. 12, 14, and 15 and/or the first connection portion 361b of FIGS. 24A and 24B) extending toward the hinge bracket and a release member (the release member 365 of FIGS. 11, 12, 14, and 15 and/or the release member 365 of FIGS. 23, 24A, and 24B) at least partially contacting the latch member. The hinge bracket may include a second connection portion (the second connection portion 353 of FIGS. 12, 14, and 15 and/or the second connection portion 353 of FIGS. 24A and 24B) protruding to be engaged with the first connection portion on the first surface of the hinge bracket.

According to an embodiment, the hinge bracket may include a connection opening (the connection opening 351 of FIGS. 5, 7A, 8A, and 9A) formed to penetrate from the first surface to the second surface to accommodate the connection assembly. The first connection portion may pass through the connection opening and configured to be engaged with the second connection portion disposed on the first surface.

According to an embodiment, the release member may be aligned with the release hole in a first direction. According to an embodiment, the latch member and the release member, respectively, may include inclined surfaces formed to be engaged with each other in areas contacting each other. The engaged inclined surfaces may be formed so that when the release member moves in the first direction away from the release hole, the latch member moves in a second direction crossing the first direction.

According to an embodiment, the second connection portion may include an end portion protruding in the second direction. The first connection portion may include an end portion protruding in a third direction opposite to the second direction to hang on the end portion of the second connection portion.

According to an embodiment, the connection assembly may be coupled to a portion of the hinge bracket. The connection assembly may include a latch member including a first connection portion extending toward the hinge cover and/or a release member at least partially contacting the latch member. The hinge cover may include a third connection portion (375)protruding to be engaged with the first connection portion on one surface (370a) facing the hinge bracket.

According to an embodiment, the release member may be aligned with the release hole in a first direction. The latch member and the release member, respectively, may include inclined surfaces formed to be engaged with each other in areas contacting each other. The engaged inclined surfaces may be formed so that when the release member moves in the first direction away from the release hole, the latch member moves in a second direction crossing the first direction.

According to an embodiment, the first connection portion may include an end portion protruding in a third direction opposite to the second direction. The third connection portion may include an end portion protruding in the second direction to hang on the end portion of the first connection portion.

According to an embodiment of the disclosure, an electronic device 101 may comprise a first housing 210, a second housing 220, at least one hinge module (the first hinge module 231 and 232 and/or the second hinge module 233 of FIG. 4, the first rotation structure 310 of FIGS. 5, 6, and 16A to 19, the second rotation structure 320 of FIGS. 5 and 6, and/or the second hinge module 330 of FIGS. 5 and 6) disposed between the first housing and the second housing and configured to rotatably connect the first housing and the second housing to each other, a hinge bracket (the hinge bracket 235 of FIG. 4 and/or the hinge bracket 350 of FIGS. 5 to 9B and 11), a flexible circuit board 270 disposed in the first housing and the second housing, and/or a hinge cover (the hinge cover 203 of FIG. 4 and/or the hinge cover 370 of FIGS. 5, 10, 12 to 20, 24A, and 24B), and/or at least one connection assembly (the connection assembly 360 of FIGS. 5, 10, and 11 and/or the connection assembly 360 of FIGS. 20 to 23). The hinge bracket may include a first surface (350a of FIGS. 6 to 7A, 8A, and 9A) to which at least one hinge module is coupled and a second surface (350b of FIGS. 7B, 8B, and 9B) facing in a direction opposite to the first surface. The hinge bracket may include at least one connection opening (the connection opening 351 of FIGS. 5, 7A, 8A, and 9A) formed in an area spaced apart from the hinge module to penetrate from the first surface to the second surface. The flexible circuit board may be disposed to cross the hinge bracket. The hinge cover may be disposed to face the second surface. The connection assembly may be disposed between the hinge bracket and the hinge cover to overlap the connection opening. The connection assembly may detachably connect the hinge cover to the hinge bracket.

According to an embodiment, the hinge bracket may include at least one seating area (the seating area 352 of FIGS. 5 to 9 and/or the seating area 352 of FIG. 20) formed to accommodate at least a portion of the flexible circuit board.

According to an embodiment, a plurality of hinge modules may be provided. The plurality of hinge modules are spaced apart from each other on the first surface of the hinge bracket.

According to an embodiment, the hinge cover may include at least one release hole (the release hole 371a of FIGS. 12 to 15 and 18 and/or the release hole 371a of FIGS. 24A and 24B) formed throughto overlap a portion of the connection assembly.

According to an embodiment, the connection assembly may include a latch member (the latch member 361 of FIGS. 11, 12, 14, and 15 and/or the latch member 361 of FIGS. 23, 24A, and 24B) including a first connection portion 361b extending toward the hinge bracket and/or a release member (the release member 365 of FIGS. 11, 12, 14, and 15 and/or or the release member 365 of FIGS. 23, 24A, and 24B) at least partially contacting the latch member and aligned with the release hole along one axis. The hinge bracket may include a second connection portion (the second connection portion 353 of FIGS. 12, 14, and 15 and/or the second connection portion 353 of FIGS. 24A and 24B) protruding to be engaged with the first connection portion on the first surface of the hinge bracket.

According to an embodiment of the disclosure, as the hinge cover is detachably connected to the hinge assembly, the separation of the rotation member coupled to the housing and the display assembly to wash the hinge assembly may be replaced with removing the hinge cover, allowing for easier washing of the hinge assembly.

According to an embodiment of the disclosure, as the hinge bracket in which a plurality of hinge components (or hinge modules) are disposed to be spaced apart and coupled together is formed as a single component, it is possible to suppress an error in rotational axis and radius of rotation between components that may occur when the hinge bracket is composed of a plurality of components.

Effects derived from the embodiments of the disclosure are not limited to the foregoing effects, and may be expanded in various ways without departing from the spirit and scope of the disclosure.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in the form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101).For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (210);
a second housing (220);
at least one hinge module (231, 232, 233;310, 320, 330) disposed between the first housing and the second housing and configured to rotatably connect the first housing and the second housing to each other;
a flexible circuit board (270) disposed in the first housing and the second housing;
a hinge bracket (235; 350) including a first surface (350a) to which the at least one hinge module is coupled and a second surface (350b) facing in a first direction opposite to a second direction in which the first surface faces; and
a hinge cover (203; 370) detachably disposed on the second surface,
wherein the flexible circuit board is disposed on an area of the first surface spaced apart from the hinge module, and the hinge bracket is disposed to intervene between the flexible circuit board and the hinge cover.

2. The electronic device of claim 1, wherein the hinge bracket includes at least one seating area (352) configured to accommodate at least a portion of the flexible circuit board;
wherein the seating area includes groove-shaped depression extending from the first surface toward the second surface.

3. The electronic device of claim 2, wherein the seating area includes:
an opening formed to penetrate from the first surface to the second surface; and
at least one plate member (340) formed to close the opening and accommodate at least a portion of the flexible circuit board.

4. The electronic device of claim 3, wherein a portion of the plate member overlapping the seating area is formed to close the seating area and a remaining portion of the plate member not overlapping the seating area is formed to surround a portion of the first surface.

5. The electronic device of claim 3, wherein a portion of the plate member overlapping the seating area is formed to close the seating area and a remaining portion of the plate member not overlapping the seating area is formed to surround a portion of the second surface.

6. The electronic device of any one of claims 1 to 5,
wherein a plurality of hinge modules are provided, and
wherein the plurality of hinge modules are spaced apart from each other on the first surface of hinge bracket.

7. The electronic device of any one of claims 1 to 6, further comprising a connection assembly (360) disposed between the hinge bracket and the hinge cover,
wherein the hinge cover includes at least one release hole (371a) formed through to overlap a portion of the connection assembly.

8. The electronic device of claim 7, wherein the connection assembly is coupled to a portion of the hinge cover,
wherein the connection assembly includes:
a latch member (361) including a first connection portion (361b) extending toward the hinge bracket; and
a release member (365) at least partially contacting the latch member, and
wherein the hinge bracket includes a second connection portion (353) protruding to be engaged with the first connection portion on the first surface of the hinge bracket.

9. The electronic device of claim 8, wherein the hinge bracket includes a connection opening (351) formed to penetrate from the first surface to the second surface to accommodate the connection assembly, and
wherein the first connection portion passes through the connection opening and configured to be engaged with the second connection portion disposed on the first surface.

10. The electronic device of claim 7,
wherein the connection assembly is coupled to a portion of the hinge bracket,
wherein the connection assembly includes:
a latch member (361) including a first connection portion (361b) extending toward the hinge cover; and
a release member (365)at least partially contacting the latch member, and
wherein the hinge cover includes a third connection portion (375)protruding to be engaged with the first connection portion on one surface (370a) facing the hinge bracket.

11. The electronic device of claims 8 to 10,
wherein the release member is aligned with the release hole in a first direction,
wherein the latch member and the release member, respectively, include inclined surfaces formed to be engaged with each other in areas contacting each other, and
wherein the engaged inclined surfaces are formed so that when the release member moves in the first direction away from the release hole, the latch member moves in a second direction crossing the first direction.

12. The electronic device of claim 11,
wherein the second connection portion includes an end portion protruding in the second direction, and
wherein the first connection portion includes an end portion protruding in a third direction opposite to the second direction to hang on the end portion of the second connection portion.

13. The electronic device of claim 11, wherein the first connection portion includes an end portion protruding in a third direction opposite to the second direction, and
wherein the third connection portion includes an end portion protruding in the second direction to hang on the end portion of the first connection portion.

14. An electronic device (101) comprising:
a first housing (210);
a second housing (220);
at least one hinge module (231, 232, 233; 310, 320, 330) disposed between the first housing and the second housing and configured to rotatably connect the first housing and the second housing to each other;
a hinge bracket (235; 350) including a first surface (350a) to which the at least one hinge module is coupled and at least one connection opening (351) formed in an area spaced apart from the hinge module to penetrate from the first surface to a second surface (350b) facing in a direction opposite to a direction in which the first surface faces;
a flexible circuit board (270) disposed to cross the hinge bracket in the first housing and the second housing;
a hinge cover (203; 370) disposed to face the second surface; and
at least one connection assembly (360) disposed between the hinge bracket and the hinge cover to overlap the connection opening and detachably connecting the hinge cover to the hinge bracket.

15. The electronic device of claim 14, wherein the hinge cover includes at least one release hole (371a) formed through to overlap a portion of the connection assembly.
